(19) Europäisches Patentamt
European Patent Office
Office européen des brevets

(11) EP 3 321 328 B1

(12) EUROPEAN PATENT SPECIFICATION

(45) Date of publication and mention of the grant of the patent:
**18.11.2020 Bulletin 2020/47**

(21) Application number: **16821408.8**

(22) Date of filing: **05.07.2016**

(51) Int Cl.:
***C09B 11/24*** *(2006.01)* ***C09D 11/32*** *(2014.01)*

(86) International application number:
**PCT/JP2016/069929**

(87) International publication number:
**WO 2017/006939 (12.01.2017 Gazette 2017/02)**

# (54) COMPOUND, COLORING COMPOSITION, INK FOR INKJET RECORDING, INKJET RECORDING METHOD, INKJET PRINTER CARTRIDGE, AND INKJET RECORDED ARTICLE

VERBINDUNG, FÄRBEZUSAMMENSETZUNG, TINTE FÜR TINTENSTRAHLAUFZEICHNUNG, TINTENSTRAHLAUFZEICHNUNGSVERFAHREN, TINTENSTRAHLDRUCKERPATRONE UND TINTENSTRAHLAUFZEICHNUNGSARTIKEL

COMPOSÉ, COMPOSITION COLORANTE, ENCRE POUR ENREGISTREMENT À JET D'ENCRE, PROCÉDÉ D'ENREGISTREMENT À JET D'ENCRE, CARTOUCHE POUR IMPRIMANTE À JET D'ENCRE, ET ARTICLE ENREGISTRÉ PAR JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2015 JP 2015138016**
**30.10.2015 JP 2015214820**

(43) Date of publication of application:
**16.05.2018 Bulletin 2018/20**

(73) Proprietor: **FUJIFILM Corporation**
**Tokyo 106-8620 (JP)**

(72) Inventors:
- **SAKAI Yusuke**
  **Ashigarakami-gun**
  **Kanagawa 258-8577 (JP)**
- **FUJIE Yoshihiko**
  **Ashigarakami-gun**
  **Kanagawa 258-8577 (JP)**
- **TATEISHI Keiichi**
  **Ashigarakami-gun**
  **Kanagawa 258-8577 (JP)**

(74) Representative: **Dehns**
**St. Bride's House**
**10 Salisbury Square**
**London EC4Y 8JD (GB)**

(56) References cited:
**EP-A1- 3 202 856**
**EP-A2- 2 669 338**
**WO-A1-2016/052685**
**WO-A1-2016/052688**
**JP-A- H09 157 562**
**JP-A- H09 241 553**
**JP-A- 2006 199 860**
**JP-A- 2014 005 462**
**JP-A- 2016 047 908**
**JP-A- 2016 069 655**
**JP-A- 2016 069 657**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND OF THE INVENTION

1. Field of the Invention

The present invention relates to a compound, a coloring composition including the compound, an ink jet recording ink, an ink jet recording method, an ink jet printer cartridge, and an ink jet recorded material.

2. Description of the Related Art

In the ink jet recording method, as is well-known in the related art, small ink droplets are jetted to be attached to a recording medium such as paper to perform printing. In this printing method, a high-resolution and high-quality image can be printed rapidly and simply using an inexpensive device. Particularly in color printing, recently, a technique of the printing method has been developed as an image forming method capable of replacing photography.

In a case where a color image is formed using the ink jet recording method, in general, at least a yellow ink, a magenta ink, a cyan ink, and a black ink are used. In these inks, for example, the following performances are required: that values of physical properties such as viscosity or surface tension are in appropriate ranges; that nozzle clogging is not likely to occur, storage stability are excellent and a recording image having a high density can be obtained; and that light fastness, ozone fastness, water fastness, and moisture fastness are excellent.

In many cases, these performances are satisfied by using an aqueous ink in which water or a mixed solution of water and a water-soluble organic solvent is used as a main solvent. However, in particular, tone, vividness, light fastness, ozone fastness, water fastness, moisture fastness, and the like largely depend on colorants, and various dyes have been studied in the related art.

For example, JP2011-148973A describes an acylamino group-substituted xanthene compound, and saturation, light fastness, and ozone fastness of an ink jet recorded material formed by using coloring composition including this compound are investigated.

In addition, JP1997-241553A (JP-H09-241553A) describes a arylsulfonylamino group-substituted xanthene compound.

EP-A 2669338 discloses substituted xanthene compounds and coloring compositions comprising such compounds and a soluble copper compound.

JP2006199860A also discloses substituted xanthene compounds and coloring compositions comprising such compounds.

## SUMMARY OF THE INVENTION

However, in the field of dyes, further improvement in the performances is required, and a compound which has high saturation and is capable of further improving image fastness such as light fastness and moisture fastness is required.

An object of the present invention is to provide a compound which is capable of forming an image having high saturation and excellent light fastness and moisture fastness. Furthermore, an object of the invention is to provide a coloring composition including the compound, an ink jet recording ink, an ink jet recording method using the ink jet recording ink, an ink jet printer cartridge, and an ink jet recorded material.

The present inventors performed a thorough investigation and found that this problem can be solved by a compound having a structure in which a salicylic acid analog structure is introduced into the side chain of a xanthene dye. Although the detailed action mechanism is not clear, it is considered that the compound according to the present invention can improve moisture fastness by the interaction of a hydroxyl group and a carboxyl group with silica or alumina which is a component of ink jet image receiving paper and polyaluminum chloride of a dye mordant contained in the same image receiving paper. In addition, it is considered that, by selecting an aminosulfonyl group as a linking group and introducing the aminosulfonyl group into a specific position, moisture fastness can be improved without deteriorating other performances (for example, light fastness and the like).

The present invention is as follows.

[1] A compound represented by Formula (1).

Formula (1)

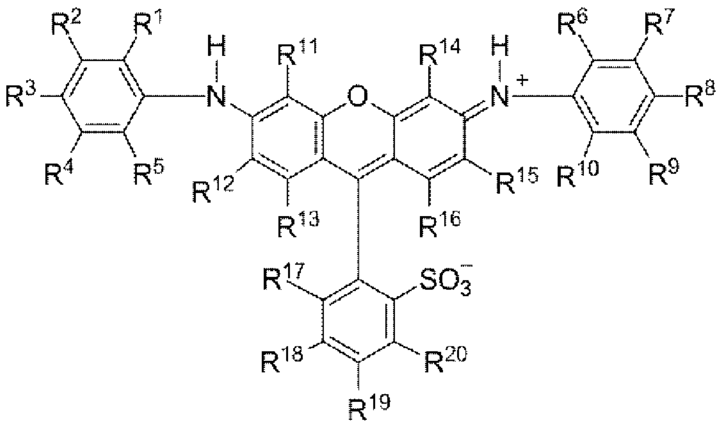

In Formula (1), $R^1$, $R^5$, $R^6$, and $R^{10}$ each independently represent an alkyl group having 1 to 6 carbon atoms; $R^3$ and $R^8$ each independently represent an alkyl group having 1 to 6 carbon atoms;
$R^4$, $R^9$, $R^{12}$ and $R^{15}$ each independently represent a hydrogen atom or a sulfo group, wherein at least one of $R^4$, $R^9$, $R^{12}$, or $R^{15}$ represents a sulfo group;
$R^{11}$, $R^{13}$, $R^{14}$, $R^{16}$, $R^{17}$, $R^{18}$, $R^{19}$, and $R^{20}$ each represent a hydrogen atom;
$R^2$, and $R^7$ each independently represent a hydrogen atom, an alkyl group or a substituent represented by Formula (A), and at least one of $R^2$ and $R^7$ represents a substituent represented by Formula (A).

Formula (A)

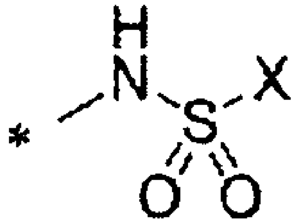

In Formula (A), X represents a substituent represented by Formula (X1), Formula (X2), or Formula (X3). * represents a bond bonded to a benzene ring.

Formula (X1)

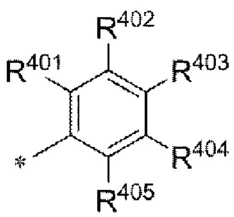

In Formula (X1), $R^{401}$, $R^{402}$, $R^{403}$, $R^{404}$, and $R^{405}$ each independently represent a hydrogen atom or a substituent selected from an alkyl group having 1 to 6 carbon atoms, an alkoxy group having 1 to 6 carbon atoms, a hydroxyl group, a carboxyl group, a chlorine atom, a nitro group, and a trifluoromethyl group, provided that at least one of $R^{401}$, $R^{402}$, $R^{403}$, $R^{404}$, or $R^{405}$ represents a hydroxyl group, and at least one of $R^{401}$, $R^{402}$, $R^{403}$, $R^{404}$, or $R^{405}$ represents a carboxyl group.
* represents a bond bonded to a sulfur atom.

Formula (X2)

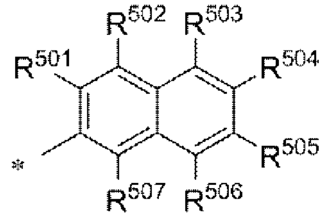

In Formula (X2), $R^{501}$, $R^{502}$, $R^{503}$, $R^{504}$, $R^{505}$, $R^{506}$, and $R^{507}$ each independently represent a hydrogen atom or a substituent selected from an alkyl group having 1 to 6 carbon atoms, an alkoxy group having 1 to 6 carbon atoms, a carboxyl group or a hydroxy group at least one of $R^{501}$, $R^{502}$, $R^{503}$, $R^{504}$, $R^{505}$, $R^{506}$, or $R^{507}$ represents a hydroxyl group, and at least one of $R^{501}$, $R^{502}$, $R^{503}$, $R^{504}$, $R^{505}$, $R^{506}$, or $R^{507}$ represents a carboxyl group. * represents a bond bonded to a sulfur atom.

Formula (X3)

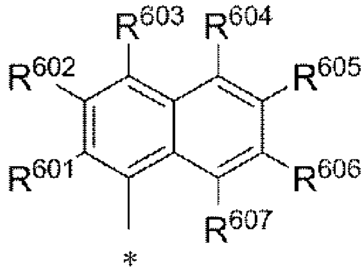

In Formula (X3), $R^{601}$, $R^{602}$, $R^{603}$, $R^{604}$, $R^{605}$, $R^{606}$, and $R^{607}$ each independently represent a hydrogen atom or a substituent selected from an alkyl group having 1 to 6 carbon atoms, an alkoxy group having 1 to 6 carbon atoms, a hydroxyl group and a carboxyl group; at least one of $R^{601}$, $R^{602}$, $R^{603}$, $R^{604}$, $R^{605}$, $R^{606}$, or $R^{607}$ represents a hydroxyl group, and at least one of $R^{601}$, $R^{602}$, $R^{603}$, $R^{604}$, $R^{605}$, $R^{606}$, or $R^{607}$ represents a carboxyl group. * represents a bond bonded to a sulfur atom.

[2] The compound according to [1], in which Formula (1) is represented by Formula (2).

Formula (2)

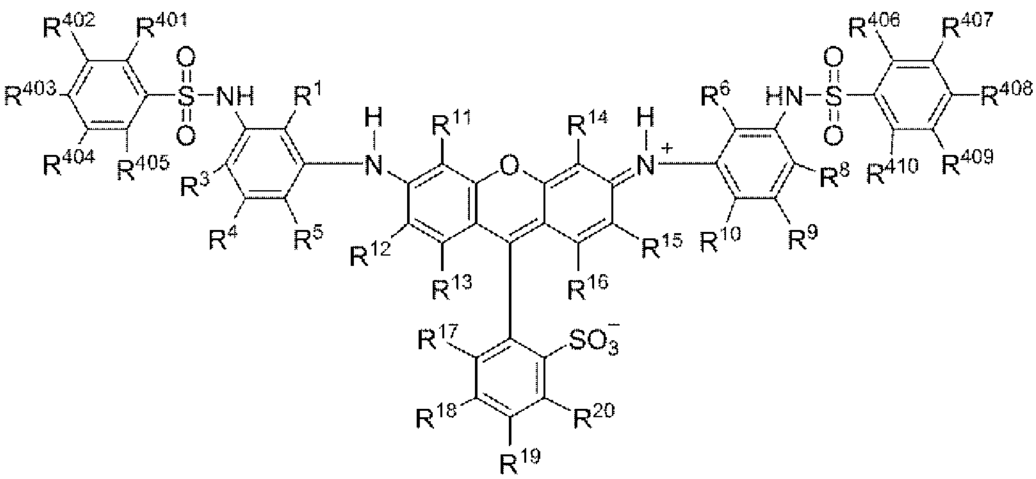

In Formula (2), $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{401}$, $R^{402}$, $R^{403}$, $R^{404}$, and $R^{405}$ are as defined in claim 1.

$R^{406}$, $R^{407}$, $R^{408}$, $R^{409}$, and $R^{410}$ each independently represent a hydrogen atom or a substituent selected from

an alkyl group having 1 to 6 carbon atoms, an alkoxy group having 1 to 6 carbon atoms, a hydroxyl group, a carboxyl group, a chlorine atom, a nitro group, and a trifluoromethyl group; at least one of $R^{406}$, $R^{407}$, $R^{408}$, $R^{409}$, or $R^{410}$ represents a hydroxyl group, and at least one of $R^{406}$, $R^{407}$, $R^{408}$, $R^{409}$, or $R^{410}$ represents a carboxyl group.

[3] The compound according to [1], in which Formula (1) is represented by Formula (3).

Formula (3)

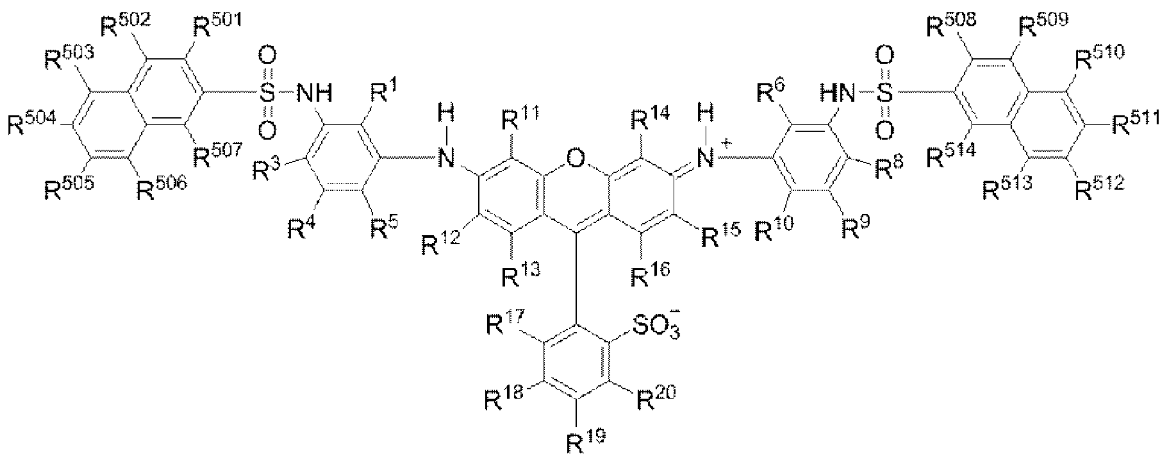

In Formula (3), $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{501}$, $R^{502}$, $R^{503}$, $R^{504}$, $R^{505}$, $R^{506}$, and $R^{507}$ are as defined in claim 1. $R^{508}$, $R^{509}$, $R^{510}$, $R^{511}$, $R^{512}$, $R^{513}$, and $R^{514}$ each independently represent a hydrogen atom or a substituent selected from an alkyl group having 1 to 6 carbon atoms, an alkoxy group having 1 to 6 carbon atoms, a carboxyl group or a hydroxy group; at least one of $R^{508}$, $R^{509}$, $R^{510}$, $R^{511}$, $R^{512}$, $R^{513}$, or $R^{514}$ represents a hydroxyl group, and at least one of $R^{508}$, $R^{509}$, $R^{510}$, $R^{511}$, $R^{512}$, $R^{513}$, or $R^{514}$ represents a carboxyl group.

[4] The compound according to [1], in which Formula (1) is represented by Formula (4).

Formula (4)

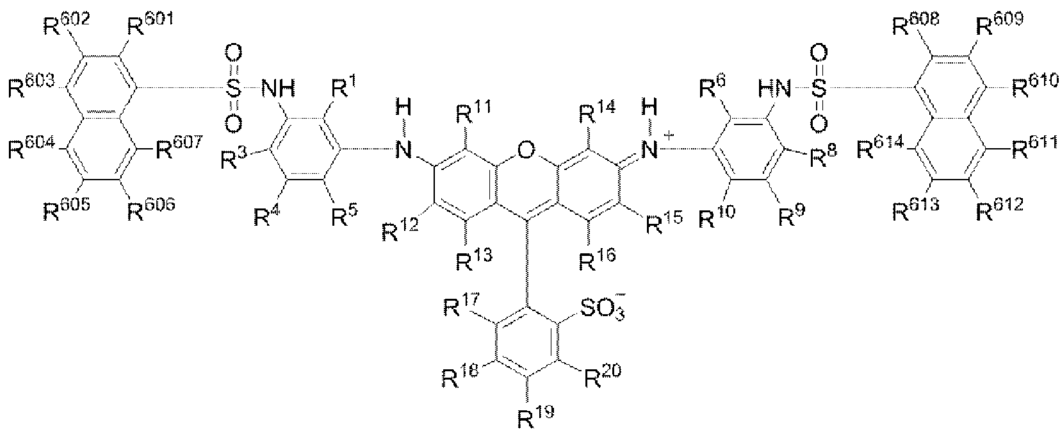

In Formula (4), $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{601}$, $R^{602}$, $R^{603}$, $R^{604}$, $R^{605}$, $R^{606}$, and $R^{607}$ are as defined in claim 1. $R^{608}$, $R^{609}$, $R^{610}$, $R^{611}$, $R^{612}$, $R^{613}$, and $R^{614}$ each independently represent a hydrogen atom or a substituent selected from an alkyl group having 1 to 6 carbon atoms, an alkoxy group having 1 to 6 carbon atoms, a hydroxyl group and a carboxyl group; at least one of $R^{608}$, $R^{609}$, $R^{610}$, $R^{611}$, $R^{612}$, $R^{613}$, or $R^{614}$ represents a hydroxyl group, and at least one of $R^{608}$, $R^{609}$, $R^{610}$, $R^{611}$, $R^{612}$, $R^{613}$, or $R^{614}$ represents a carboxyl group.

[5] The compound according to [2], in which $R^{401}$ and $R^{406}$ each independently represent a hydroxyl group.

[6] A coloring composition comprising: the compound according to any one of [1] to [5].

[7] An ink jet recording ink comprising: the compound according to any one of [1] to [5].
[8] An ink jet recording method using the ink jet recording ink according to [7].
[9] An ink jet printer cartridge which is filled with the ink jet recording ink according to [7].
[10] An ink jet recorded material which is obtained by forming a colored image on a recording material using the ink jet recording ink according to [7].

An object of the present invention is to provide a compound which is capable of forming an image having high saturation and excellent light fastness and moisture fastness. In addition, a coloring composition including the compound, an ink jet recording ink, an ink jet recording method using the ink jet recording ink, an ink jet printer cartridge, and an ink jet recorded material can be provided.

**BRIEF DESCRIPTION OF THE DRAWINGS**

Fig. 1 is a view showing a $^1$H-NMR (nuclear magnetic resonance) spectrum of Exemplary Compound (1-11) in dimethylsulfoxide-d6.
Fig. 2 is a view showing a $^1$H-NMR spectrum of Exemplary Compound (1-18) in dimethylsulfoxide-d6.
Fig. 3 is a view showing a $^1$H-NMR spectrum of Exemplary Compound (1-26) in dimethylsulfoxide-d6.

**DESCRIPTION OF THE PREFERRED EMBODIMENTS**

Hereinafter, the present invention will be described in detail.
Examples of the alkyl group include a linear or branched alkyl group. As the alkyl group, an alkyl group having 1 to 30 carbon atoms is preferable, and examples thereof include a methyl group, an ethyl group, a n-propyl group, an i-propyl group, a t-butyl group, a n-octyl group, an eicosyl group, and a 2-ethylhexyl group.
As the alkoxy group, examples thereof include a methoxy group, an ethoxy group, an isopropoxy group and a t-butoxy group.
The carboxyl group or the sulfo group may be in the form of a salt, and examples of a counter cation which forms a salt with the carboxyl group or the sulfo group include an ammonium ion, an alkali metal ion (for example, a lithium ion, a sodium ion, or a potassium ion), and an organic cation (for example, a tetramethylammonium ion, a tetramethylguanidium ion, or tetramethylphosphonium). Among these, a lithium salt, a sodium salt, a potassium salt, or an ammonium salt is preferable, a sodium salt or a mixed salt containing a sodium salt as a major component is more preferable, and a sodium salt is most preferable.
In the present invention, in a case where a compound is a salt, the salt is dissociated and present in a water-soluble ink in the form of ions.

[Compound Represented by Formula (1)]

Hereinafter, a compound represented by Formula (1) will be described.

Formula (1)

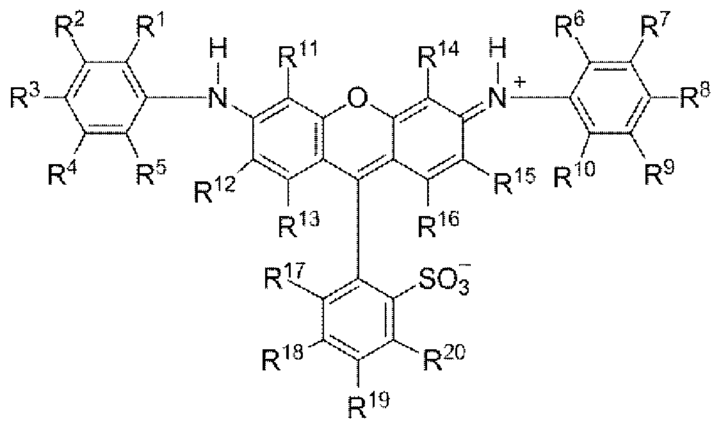

In Formula (1), $R^1$, $R^5$, $R^6$, and $R^{10}$ each independently represent an alkyl group having 1 to 6 carbon atoms;

$R^3$ and $R^8$ each independently represent an alkyl group having 1 to 6 carbon atoms;

$R^4$, $R^9$, $R^{12}$ and $R^{15}$ each independently represent a hydrogen atom or a sulfo group, wherein at least one of $R^4$, $R^9$, $R^{12}$, or $R^{15}$ represents a sulfo group;

$R^{11}$, $R^{13}$, $R^{14}$, $R^{16}$, $R^{17}$, $R^{18}$, $R^{19}$, and $R^{20}$ each represent a hydrogen atom;

$R^2$ and $R^7$ each independently represent a hydrogen atom, an alkyl group or a substituent represented by Formula (A), and at least one of $R^2$ and $R^7$ represents a substituent represented by Formula (A).

Formula (A)

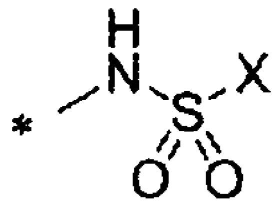

In Formula (A), X represents a substituent represented by Formula (X1), Formula (X2), or Formula (X3). * represents a bond bonded to a benzene ring.

Formula (X1)

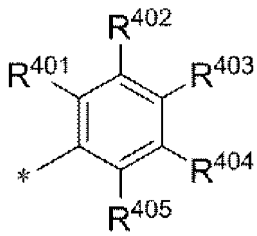

In Formula (X1), $R^{401}$, $R^{402}$, $R^{403}$, $R^{404}$, and $R^{405}$ each independently represent a hydrogen atom or a substituent selected from an alkyl group having 1 to 6 carbon atoms, an alkoxy group having 1 to 6 carbon atoms, a hydroxyl group, a carboxyl group, a chlorine atom, a nitro group, and a trifluoromethyl group; at least one of $R^{401}$, $R^{402}$, $R^{403}$, $R^{404}$, or $R^{405}$ represents a hydroxyl group, and at least one of $R^{401}$, $R^{402}$, $R^{403}$, $R^{404}$, or $R^{405}$ represents a carboxyl group. * represents a bond bonded to a sulfur atom.

Formula (X2)

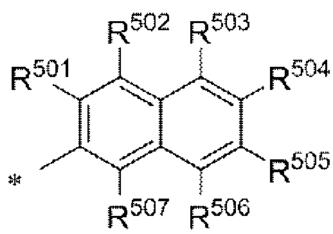

In Formula (X2), $R^{501}$, $R^{502}$, $R^{503}$, $R^{504}$, $R^{505}$, $R^{506}$, and $R^{507}$ each independently represent a hydrogen atom or a substituent selected from an alkyl group having 1 to 6 carbon atoms, an alkoxy group having 1 to 6 carbon atoms, a carboxyl group or a hydroxy group; at least one of $R^{501}$, $R^{502}$, $R^{503}$, $R^{504}$, $R^{505}$, $R^{506}$, or $R^{507}$ represents a hydroxyl group, and at least one of $R^{501}$, $R^{502}$, $R^{503}$, $R^{504}$, $R^{505}$, $R^{506}$, or $R^{507}$ represents a carboxyl group. * represents a bond bonded to a sulfur atom.

Formula (X3)

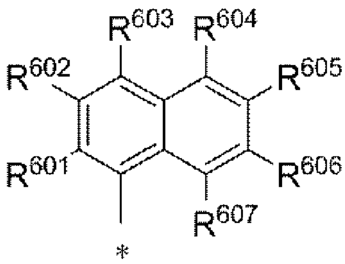

In Formula (X3), $R^{601}$, $R^{602}$, $R^{603}$, $R^{604}$, $R^{605}$, $R^{606}$, and $R^{607}$ each independently represent a hydrogen atom or a substituent selected from an alkyl group having 1 to 6 carbon atoms, an alkoxy group having 1 to 6 carbon atoms, a hydroxyl group and a carboxyl group; at least one of $R^{601}$, $R^{602}$, $R^{603}$, $R^{604}$, $R^{605}$, $R^{606}$, or $R^{607}$ represents a hydroxyl group, and at least one of $R^{601}$, $R^{602}$, $R^{603}$, $R^{604}$, $R^{605}$, $R^{606}$, or $R^{607}$ represents a carboxyl group. * represents a bond bonded to a sulfur atom.

In Formula (1), $R^1$, $R^5$, $R^6$, and $R^{10}$ each independently represent an alkyl group having 1 to 6 carbon atoms, and from the viewpoints of raw material availability and synthesis easiness, an alkyl group having 1 to 3 carbon atoms is preferable, and a methyl group or an ethyl group is more preferable.

In Formula (1), $R^4$, $R^9$, $R^{12}$, and $R^{15}$ each independently represent a hydrogen atom or a sulfo group. At least one of $R^4$, $R^9$, $R^{12}$, or $R^{15}$ is a sulfo group.

Examples of a counter cation of the sulfo group include a hydrogen atom (a proton), an alkali metal cation (a lithium ion, a sodium ion, or a potassium ion), and an ammonium ion, and from the viewpoint of synthesis easiness (easy handleability of dye powder), an alkali metal cation is preferable.

It is preferable that two or more of $R^4$, $R^9$, $R^{12}$, and $R^{15}$ represent sulfo groups.

A case where $R^{12}$ and $R^{15}$ each represent a sulfo group and $R^4$ and $R^9$ each represent a hydrogen atom, or a case where $R^4$ and $R^9$ each represent a sulfo group and $R^{12}$ and $R^{15}$ each represent a hydrogen atom is preferable, and a case where $R^{12}$ and $R^{15}$ each represent a sulfo group and $R^4$ and $R^9$ each represent a hydrogen atom is more preferable.

In Formula (1), $R^2$ and $R^7$ each independently represent a hydrogen atom, an alkyl group, or a substituent represented by Formula (A), and at least one of $R^2$ or $R^7$ represents a substituent represented by Formula (A).

In a case where $R^2$ and $R^7$ each represent an alkyl group, an alkyl group having 1 to 6 carbon atoms is preferable, an alkyl group having 1 to 3 carbon atoms is more preferable, and a methyl group or an ethyl group is still more preferable. For $R^3$ and $R^8$, an alkyl group having 1 to 3 carbon atoms is preferable, and a methyl group or an ethyl group is more preferable.

w

In Formula (A), X represent a substituent represented by Formula (X1), Formula (X2), or Formula (X3).

Examples of a counter cation of the carboxyl group in Formula (X1), Formula (X2), or Formula (X3) include a hydrogen atom (a proton), an alkali metal cation (a lithium ion, a sodium ion, or a potassium ion), and an ammonium ion, and an alkali metal cation is preferable.

In Formula (X1), $R^{401}$, $R^{402}$, $R^{403}$, $R^{404}$, and $R^{405}$ each independently represent a hydrogen atom or a substituent as defined in claim 1, at least one of $R^{401}$, $R^{402}$, $R^{403}$, $R^{404}$, or $R^{405}$ represents a hydroxyl group, and at least one of $R^{401}$, $R^{402}$, $R^{403}$, $R^{404}$, or $R^{405}$ represents a carboxyl group.

It is preferable that one to three of $R^{401}$, $R^{402}$, $R^{403}$, $R^{404}$, and $R^{405}$ represent hydroxyl groups, more preferable that one or two of $R^{401}$, $R^{402}$, $R^{403}$, $R^{404}$, and $R^{405}$ represent hydroxyl groups, and still more preferable that one of $R^{401}$, $R^{402}$, $R^{403}$, $R^{404}$, and $R^{405}$ represents a hydroxyl group. It is preferable that one to three of $R^{401}$, $R^{402}$, $R^{403}$, $R^{404}$, and $R^{405}$ represent carboxyl groups, and more preferable that one or two of $R^{401}$, $R^{402}$, $R^{403}$, $R^{404}$, and $R^{405}$ represent carboxyl groups.

$R^{401}$ preferably represents a hydroxyl group.

A case where $R^{403}$ represents a hydroxyl group and $R^{402}$ represents a carboxyl group, or a case where $R^{401}$ represents a hydroxyl group and $R^{402}$ represents a carboxyl group is preferable, and a case where $R^{401}$ represents a hydroxyl group and $R^{402}$ represents a carboxyl group is more preferable.

In a case where $R^{401}$, $R^{402}$, $R^{403}$, $R^{404}$, and $R^{405}$ each represent an alkyl group or an alkoxy group, an alkyl group or an alkoxy group having 1 to 3 carbon atoms is preferable, and a methyl group or a methoxy group is particularly preferable. A case where $R^{401}$, $R^{402}$, $R^{403}$, $R^{404}$, and $R^{405}$ each preferably represent a carboxyl group, a chlorine atom, or a nitro group, and more preferably a carboxyl group. In particular, in a case where $R^{401}$ represents a hydroxyl group and $R^{402}$ represents a carboxyl group, $R^{404}$ is preferably a substituent described above.

Hereinafter, specific examples of the group represented by Formula (X1) will be shown, but the groups are not

limited to the specific examples. In the following structural formulae of the specific compounds, Me represents a methyl group. * represents a bond bonded to a sulfur atom.

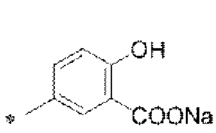
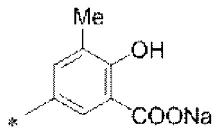
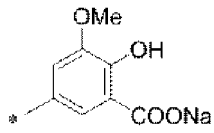

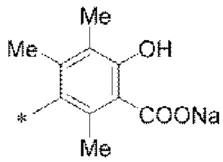
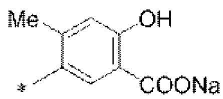
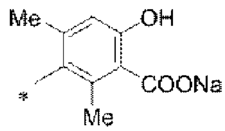

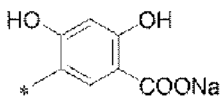
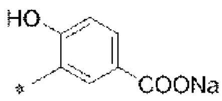
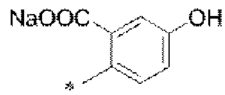

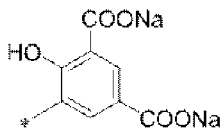
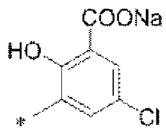
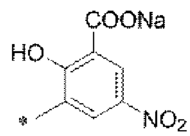

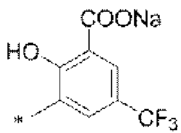

In Formula (X2), $R^{501}$, $R^{502}$, $R^{503}$, $R^{504}$, $R^{505}$, $R^{506}$, and $R^{507}$ each independently represent a hydrogen atom or a substituent as defined in claim 1; at least one of $R^{501}$, $R^{502}$, $R^{503}$, $R^{504}$, $R^{505}$, $R^{506}$, or $R^{507}$ represents a hydroxyl group, and at least one of $R^{501}$, $R^{502}$, $R^{503}$, $R^{504}$, $R^{505}$, $R^{506}$, or $R^{507}$ represents a carboxyl group. As the substituent, an alkyl group or an alkoxy group having 1 to 3 carbon atoms is preferable, and a methyl group or a methoxy group is particularly preferable.

It is preferable that one to three of $R^{501}$, $R^{502}$, $R^{503}$, $R^{504}$, $R^{505}$, $R^{506}$, and $R^{507}$ represent hydroxyl groups, more preferable that one or two of $R^{501}$, $R^{502}$, $R^{503}$, $R^{504}$, $R^{505}$, $R^{506}$, and $R^{507}$ represent hydroxyl groups, and still more preferable that one of $R^{501}$, $R^{502}$, $R^{503}$, $R^{504}$, $R^{505}$, $R^{506}$, and $R^{507}$ represents a hydroxyl group. It is preferable that one or two of $R^{501}$, $R^{502}$, $R^{503}$, $R^{504}$, $R^{505}$, $R^{506}$, and $R^{507}$ represent carboxyl groups, and more preferable that one of $R^{501}$, $R^{502}$, $R^{503}$, $R^{504}$, $R^{505}$, $R^{506}$, and $R^{507}$ represents a carboxyl group.

A case where $R^{504}$, represents a hydroxyl group and $R^{503}$ represents a carboxyl group, or a case where $R^{504}$, represents a hydroxyl group and $R^{505}$ represents a carboxyl group is preferable, and a case where $R^{504}$, represents a hydroxyl group and $R^{503}$ represents a carboxyl group is more preferable.

Hereinafter, specific examples of the group represented by Formula (X2) will be shown, but the groups are not limited to the specific examples. * represents a bond bonded to a sulfur atom.

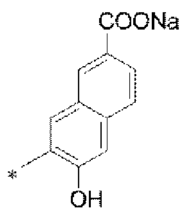
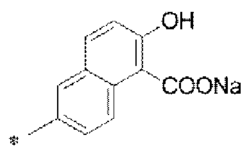
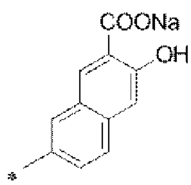

In Formula (X3), $R^{601}$, $R^{602}$, $R^{603}$, $R^{604}$, $R^{605}$, $R^{606}$, and $R^{607}$ each independently represent a hydrogen atom

or a substituent as defined in claim 1; at least one of $R^{601}$, $R^{602}$, $R^{603}$, $R^{604}$, $R^{605}$, $R^{606}$, or $R^{607}$ represents a hydroxyl group, and at least one of $R^{601}$, $R^{602}$, $R^{603}$, $R^{604}$, $R^{605}$, $R^{606}$, or $R^{607}$ represents a carboxyl group. As the substituent, an alkyl group or an alkoxy group having 1 to 3 carbon atoms is preferable, and a methyl group or a methoxy group is particularly preferable.

It is preferable that one to three of $R^{601}$, $R^{602}$, $R^{603}$, $R^{604}$, $R^{605}$, $R^{606}$, and $R^{607}$ represent hydroxyl groups, more preferable that one or two of $R^{601}$, $R^{602}$, $R^{603}$, $R^{604}$, $R^{605}$, $R^{606}$, and $R^{607}$ represent hydroxyl groups, and still more preferable that one of $R^{601}$, $R^{602}$, $R^{603}$, $R^{604}$, $R^{605}$, $R^{606}$, and $R^{607}$ represents a hydroxyl group. It is preferable that one or two of $R^{601}$, $R^{602}$, $R^{603}$, $R^{604}$, $R^{605}$, $R^{606}$, and $R^{607}$ represent carboxyl groups, and more preferable that one of $R^{601}$, $R^{602}$, $R^{603}$, $R^{604}$, $R^{605}$, $R^{606}$, and $R^{607}$ represents a carboxyl group.

A case where $R^{606}$ represents a hydroxyl group and $R^{605}$ represents a carboxyl group, or a case where $R^{603}$ represents a hydroxyl group and $R^{602}$ represents a carboxyl group is preferable, and a case where $R^{606}$ represents a hydroxyl group and $R^{605}$ represents a carboxyl group is more preferable.

Hereinafter, specific examples of the group represented by Formula (X3) will be shown, but the groups are not limited to the specific examples. * represents a bond bonded to a sulfur atom.

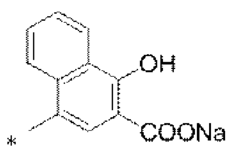
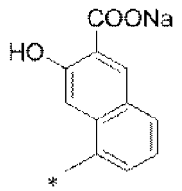
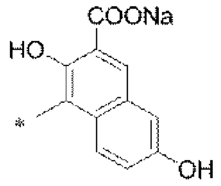

The compound represented by Formula (1) is preferably a compound represented by Formula (2), Formula (3), or Formula (4).

Formula (2)

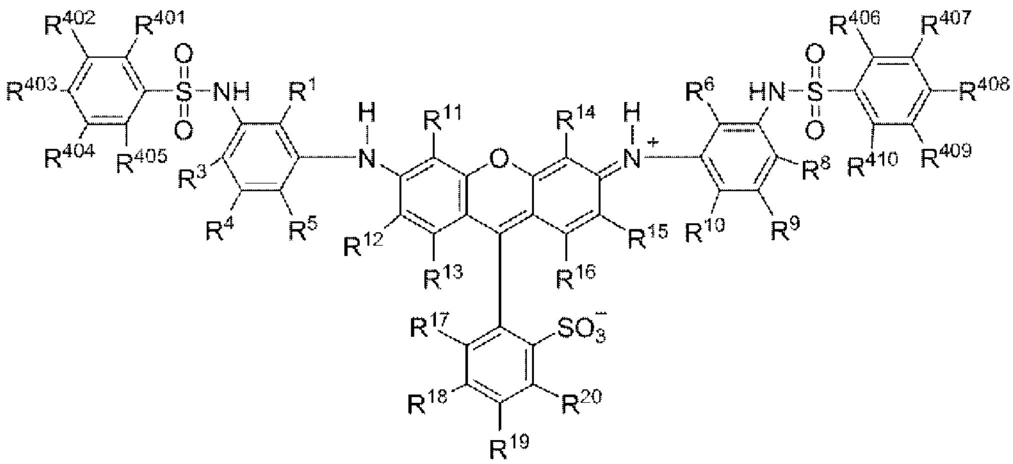

In Formula (2), $R^1$, $R^5$, $R^6$, $R^{10}$, $R^4$, $R^9$, $R^{11}$, $R^{12}$, $R^{13}$, $R^{14}$, $R^{15}$, $R^{16}$, $R^{17}$, $R^{18}$, $R^{19}$, $R^{20}$, $R^3$, $R^8$, $R^{401}$, $R^{402}$, $R^{403}$, $R^{404}$, and $R^{405}$ are as defined in claim 1. $R^{406}$, $R^{407}$, $R^{408}$, $R^{409}$, and $R^{410}$ each independently represent a hydrogen atom or a substituent selected from an alkyl group having 1 to 6 carbon atoms, an alkoxy group having 1 to 6 carbon atoms, a hydroxyl group, a carboxyl group, a chlorine atom, a nitro group, and a trifluoromethyl group; at least one of $R^{406}$, $R^{407}$, $R^{408}$, $R^{409}$, or $R^{410}$ represents a hydroxyl group, and at least one of $R^{406}$, $R^{407}$, $R^{408}$, $R^{409}$, or $R^{410}$ represents a carboxyl group.

Formula (3)

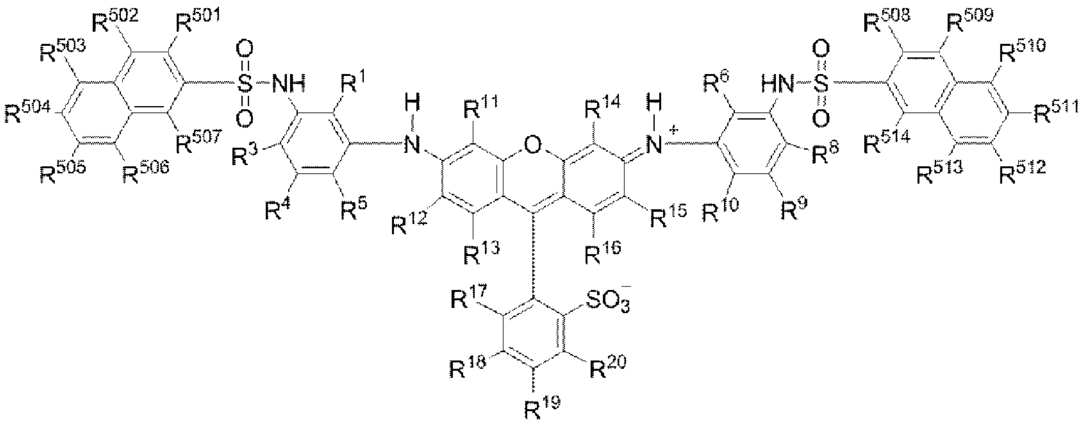

In Formula (3), $R^1$, $R^5$, $R^6$, $R^{10}$, $R^4$, $R^9$, $R^{11}$, $R^{12}$, $R^{13}$, $R^{14}$, $R^{15}$, $R^{16}$, $R^{17}$, $R^{18}$, $R^{19}$, $R^{20}$ $R^3$, $R^8$, $R^{501}$, $R^{502}$, $R^{503}$, $R^{504}$, $R^{505}$, $R^{506}$, and $R^{507}$ are as defined in claim 1. $R^{508}$, $R^{509}$, $R^{510}$, $R^{511}$, $R^{512}$, $R^{513}$, and $R^{514}$ each independently represent a hydrogen atom or a substituent selected from an alkyl group having 1 to 6 carbon atoms, an alkoxy group having 1 to 6 carbon atoms, a hydroxyl group, and a carboxyl group; at least one of $R^{508}$, $R^{509}$, $R^{510}$, $R^{511}$, $R^{512}$, $R^{513}$, or $R^{514}$ represents a hydroxyl group, and at least one of $R^{508}$, $R^{509}$, $R^{510}$, $R^{511}$, $R^{512}$, $R^{513}$, or $R^{514}$ represents a carboxyl group.

Formula (4)

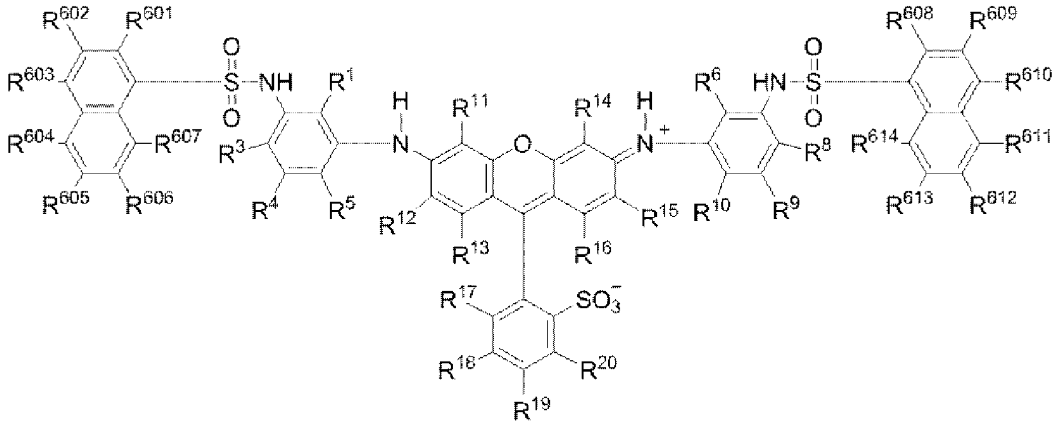

In Formula (4), $R^1$, $R^5$, $R^6$, $R^{10}$, $R^4$, $R^9$, $R^{11}$, $R^{12}$, $R^{13}$, $R^{14}$, $R^{15}$, $R^{16}$, $R^{17}$, $R^{18}$, $R^{19}$, $R^{20}$ $R^3$, $R^8$, $R^{601}$, $R^{602}$, $R^{603}$, $R^{604}$, $R^{605}$, $R^{606}$, and $R^{607}$ are as defined in claim 1 $R^{608}$, $R^{609}$, $R^{610}$, $R^{611}$, $R^{612}$, $R^{613}$, and $R^{614}$ each independently represent a hydrogen atom or a substituent selected from an alkyl group having 1 to 6 carbon atoms, an alkoxy group having 1 to 6 carbon atoms, a hydroxyl group, and a carboxyl group; at least one of $R^{608}$, $R^{609}$, $R^{610}$, $R^{611}$, $R^{612}$, $R^{613}$, or $R^{614}$ represents a hydroxyl group, and at least one of $R^{608}$, $R^{609}$, $R^{610}$, $R^{611}$, $R^{612}$, $R^{613}$, or $R^{614}$ represents a carboxyl group.

$R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (2) each have the same definition and the same preferable range as those of $R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (1).

$R^3$ and $R^8$ in Formula (2) each independently represent an alkyl group having 1 to 6 carbon atoms, an alkyl group having 1 to 3 carbon atoms is preferable, and a methyl group or an ethyl group is more preferable.

$R^{401}$, $R^{402}$, $R^{403}$, $R^{404}$, and $R^{405}$ in Formula (2) have the same definition and the same preferable ranges as those of $R^{401}$, $R^{402}$, $R^{403}$, $R^{404}$, and $R^{405}$ in Formula (X1).

$R^{406}$, $R^{407}$, $R^{408}$, $R^{409}$, and $R^{410}$ in Formula (2) have the same definition and the same preferable ranges as those of $R^{401}$, $R^{402}$, $R^{403}$, $R^{404}$, and $R^{405}$ in Formula (2).

$R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (3) each have the same definition and the same preferable range as those of $R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$,

and $R^{20}$ in Formula (1).

$R^3$ and $R^8$ in Formula (3) each independently represent an alkyl group having 1 to 6 carbon atoms, an alkyl group having 1 to 3 carbon atoms is preferable, and a methyl group or an ethyl group is more preferable.

$R^{501}$, $R^{502}$, $R^{503}$, $R^{504}$, $R^{505}$, $R^{506}$, and $R^{507}$ in Formula (3) each have the same definition and the same preferable range as those of $R^{501}$, $R^{502}$, $R^{503}$, $R^{504}$, $R^{505}$, $R^{506}$, and $R^{507}$ in Formula (X2).

$R^{508}$, $R^{509}$, $R^{510}$, $R^{511}$, $R^{512}$, $R^{513}$, and $R^{514}$ in Formula (3) each have the same definition and the same preferable range as those of $R^{501}$, $R^{502}$, $R^{503}$, $R^{504}$, $R^{505}$, $R^{506}$, and $R^{507}$ in Formula (3).

$R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (4) each have the same definition and the same preferable range as those of $R^1$, $R^4$, $R^5$, $R^6$, $R^9$, $R^{10}$, $R^{11}$, $R^{12}$, $R^{13}$, $R^{14}$, $R^{15}$, $R^{16}$, $R^{17}$, $R^{18}$, $R^{19}$, and $R^{20}$ in Formula (1).

$R^3$ and $R^8$ in Formula (4) each independently represent an alkyl group having 1 to 6 carbon atoms, an alkyl group having 1 to 3 carbon atoms is preferable, a methyl group or an ethyl group is more preferable.

$R^{601}$, $R^{602}$, $R^{603}$, $R^{604}$, $R^{605}$, $R^{606}$, and $R^{607}$ in Formula (4) each have the same definition and the same preferable range as those of $R^{601}$, $R^{602}$, $R^{603}$, $R^{604}$, $R^{605}$, $R^{606}$, and $R^{607}$ in Formula (X3).

$R^{608}$, $R^{609}$, $R^{610}$, $R^{611}$, $R^{612}$, $R^{613}$, and $R^{614}$ in Formula (4) each have the same definition and the same preferable range as those of $R^{601}$, $R^{602}$, $R^{603}$, $R^{604}$, $R^{605}$, $R^{606}$, and $R^{607}$ in Formula (4).

Hereinafter, specific examples of the compound represented by Formula (1) will be shown, but the compounds are not limited to the specific examples. In the following structural formulae of the specific compounds, Me represents a methyl group and Et represents an ethyl group.

(1-1)

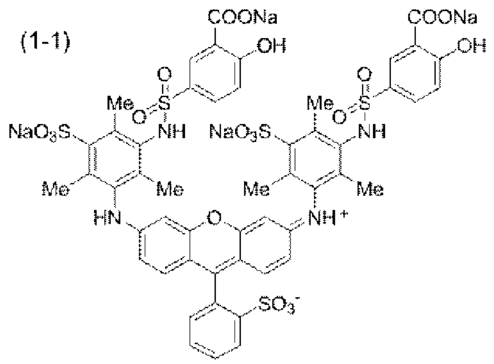

(1-2)

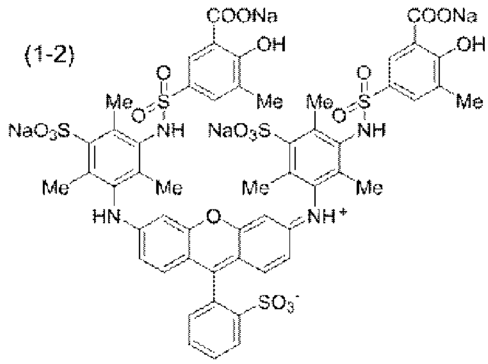

(1-3)

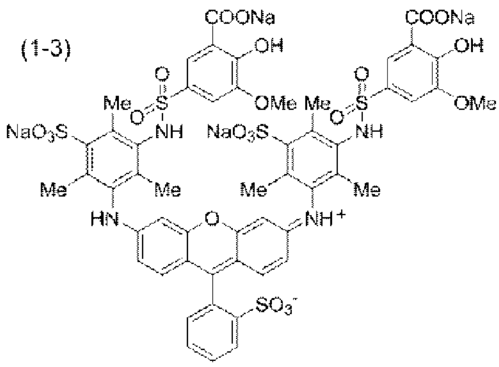

(1-4)

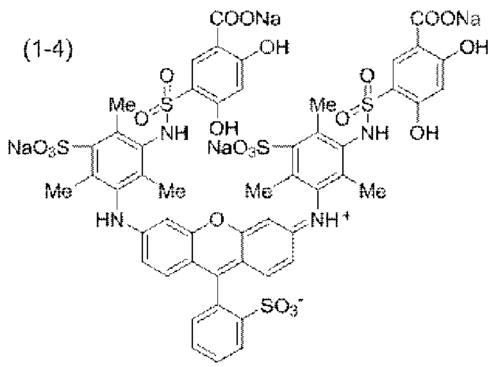

(1-5)

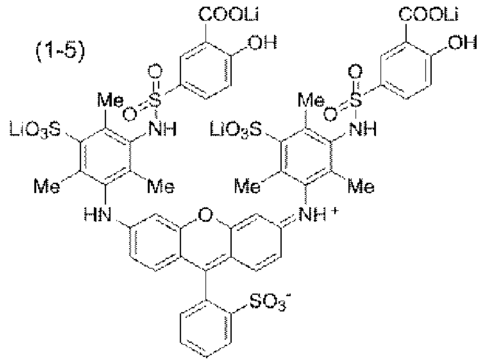

(1-6)

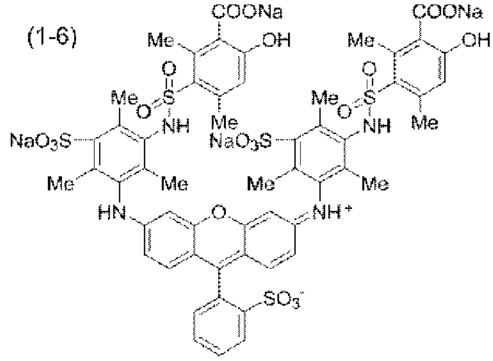

(1-7)

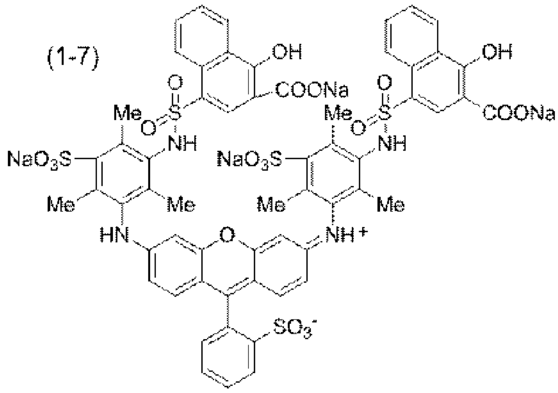

(1-8)

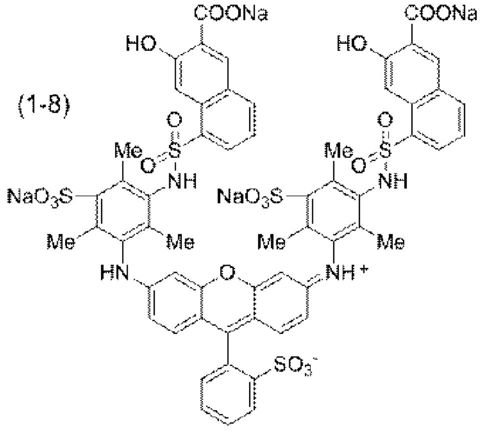

(1-9)

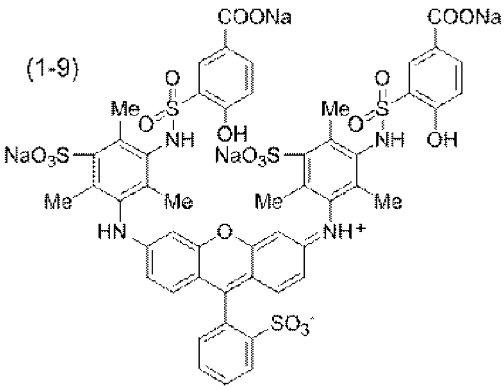

(1-10)

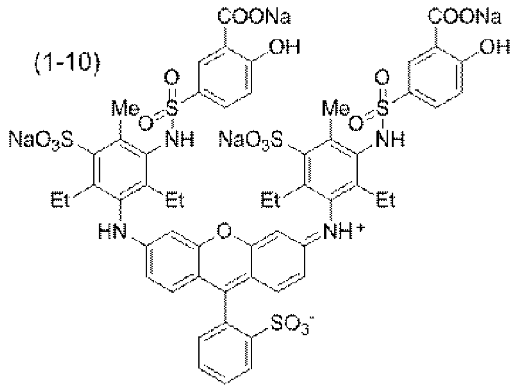

(1-11)

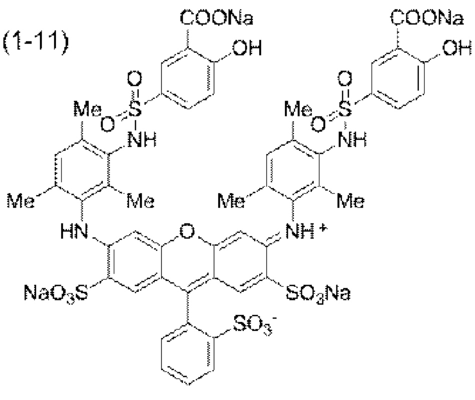

(1-12)

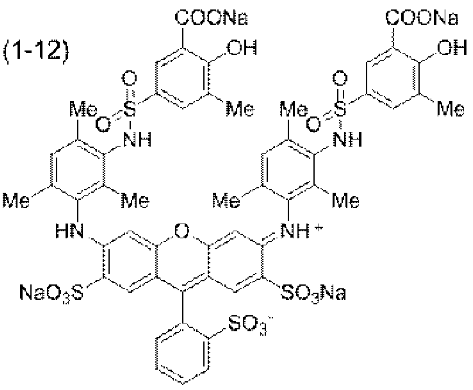

(1-13)
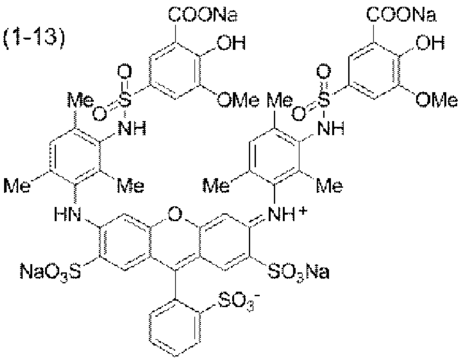

(1-14)
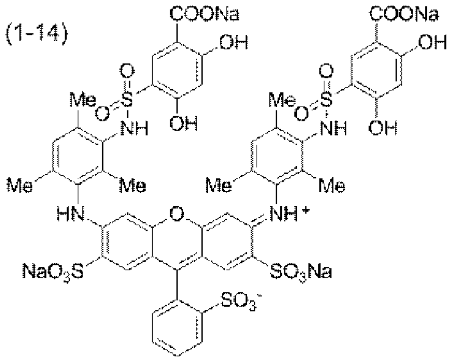

(1-15)
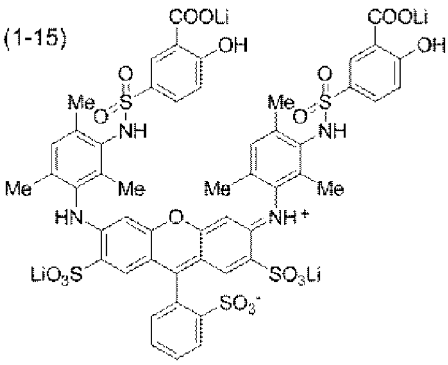

(1-16)
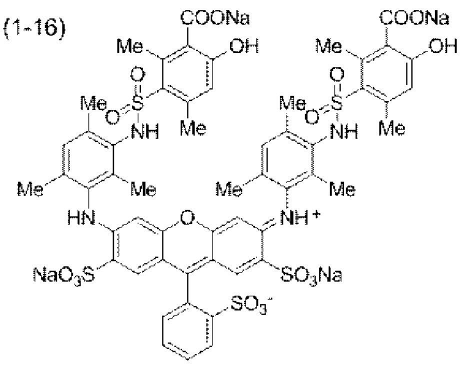

(1-17)
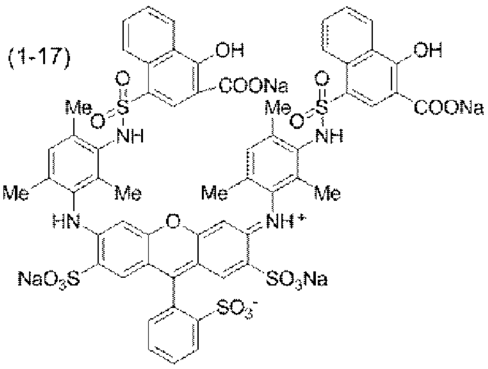

(1-18)
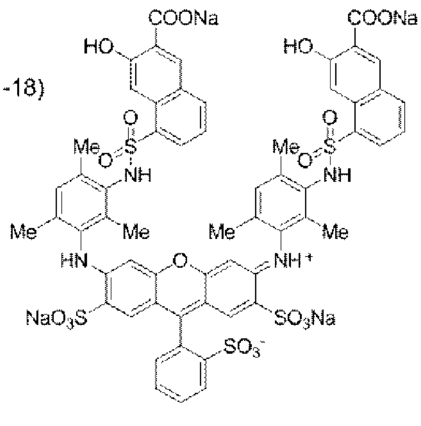

(1-19)
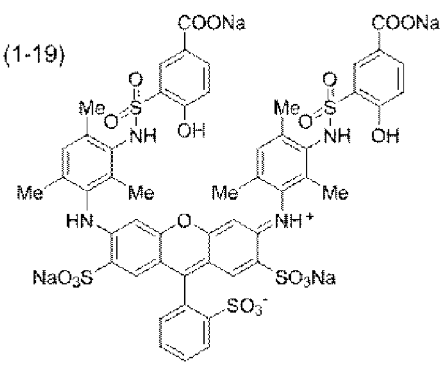

(1-20)
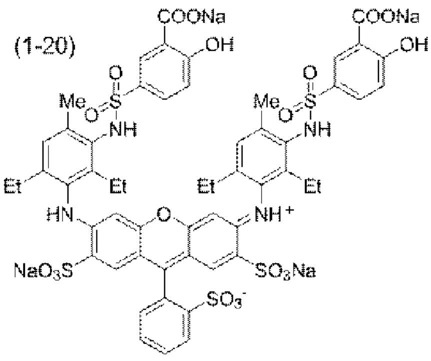

(1-21)

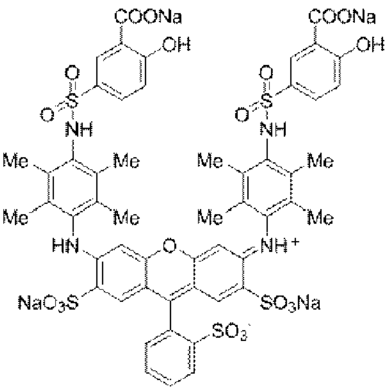

(1-22)

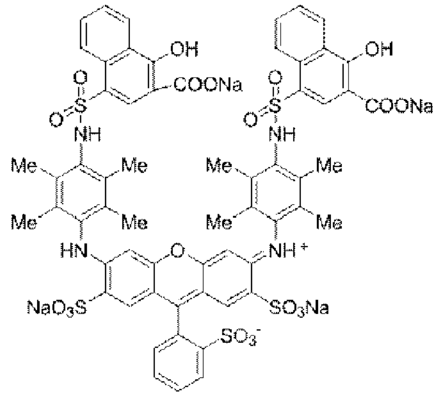

(1-23)

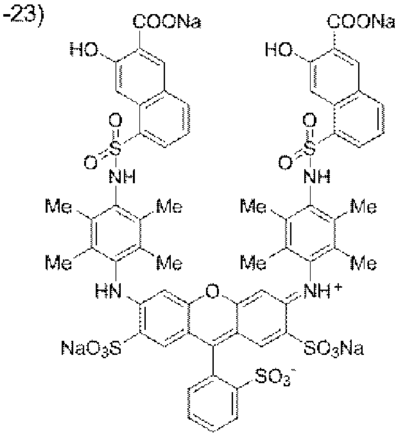

(1-24)

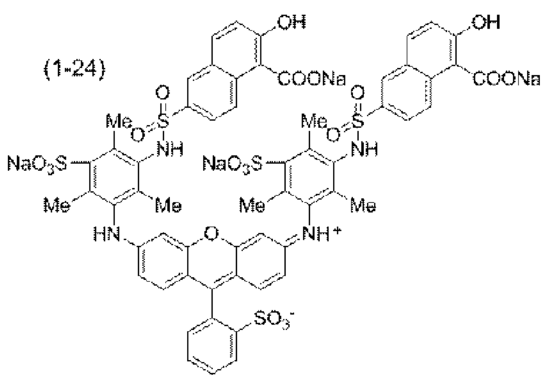

(1-25)

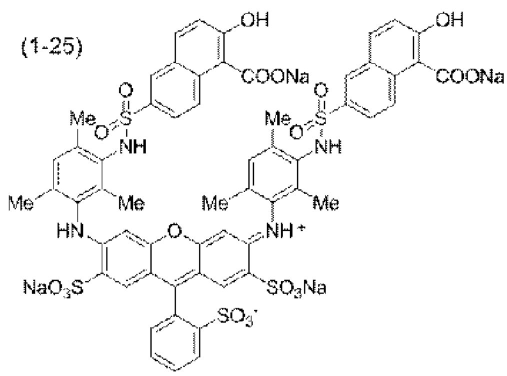

(1-26)

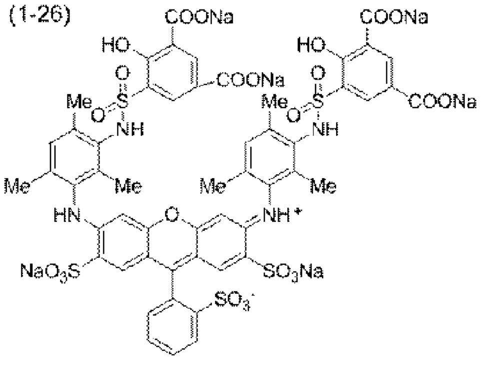

(1-27)

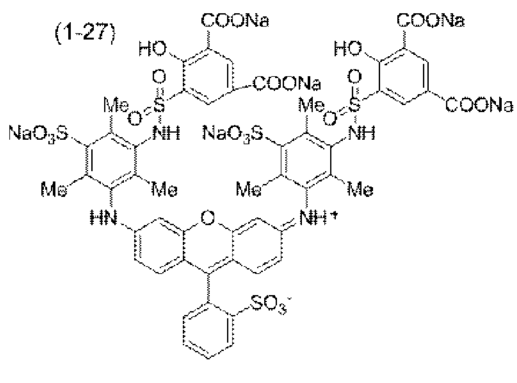

(1-28)

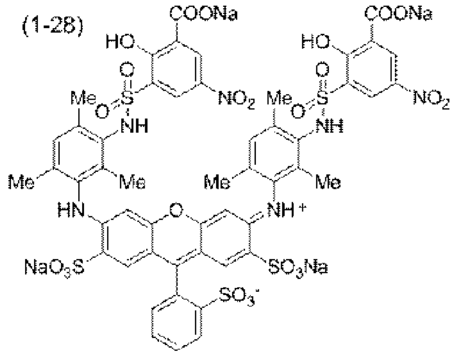

(1-29)

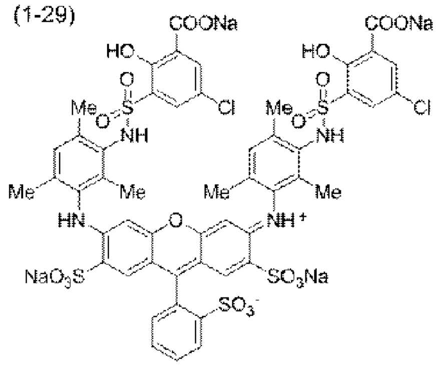

A specific method for synthesizing the compound represented by Formula (1) will be exemplified in Examples.

[Coloring Composition]

A coloring composition according to the present invention includes at least one compound represented by Formula (1). The coloring composition according to the present invention may include a medium and, in a case where a solvent is used as the medium, is suitable as an ink jet recording ink. The coloring composition according to the present invention can be prepared by using a lipophilic medium or an aqueous medium as the medium and dissolving and/or dispersing the compounds represented by Formula (1) therein. It is preferable that an aqueous medium is used as the medium. Examples of the coloring composition according to the present invention include an ink composition excluding a medium.

In the present invention, the content of the compound according to the present invention included in the coloring composition is determined according to the kind of the substituent in Formula (1) to be used, the kind of the solvent component used to prepare the coloring composition, and the like. For example, the content of the compound represented by Formula (1) in the coloring composition is preferably 1 to 20 mass%, more preferably 1 to 10 mass%, and still more preferably 2 to 6 mass% with respect to the total mass of the coloring composition.

By adjusting the content of the compound represented by Formula (1) in the coloring composition to be 1 mass% or higher, the image density of ink on a recording medium during printing can be improved. In addition, by adjusting the total amount of the compound represented by Formula (1) in the coloring composition to be 10 mass% or lower, in a case where the coloring composition is used in an ink jet recording method, the jettability of the coloring composition can be made to be excellent, and an effect of preventing the clogging or the like of an ink jet nozzle can be obtained.

The coloring composition according to the present invention optionally includes other additives within a range where the effects of the present invention do not deteriorate. Examples of the other additives include additives which may be used in an ink jet recording ink described below.

[Ink Jet Recording Ink]

Next, the ink jet recording ink according to the present invention will be described.

The ink jet recording ink according to the present invention includes the compound represented by Formula (1) according to the present invention.

The ink jet recording ink can be prepared by dissolving and/or dispersing the compound represented by Formula (1) in a lipophilic medium or an aqueous medium. The ink jet recording ink is preferably an ink obtained by using an aqueous medium.

The ink jet recording ink optionally includes other additives within a range where the effects of the present invention do not deteriorate. Examples of the other additives include well-known additives such as an anti-drying agent (wetting agent), an antifading agent, an emulsion stabilizer, a penetration enhancer, an ultraviolet absorber, a preservative, a fungicide, a pH adjuster, a surface tension adjuster, an anti-foaming agent, a viscosity adjuster, a dispersant, a dispersion stabilizer, a rust inhibitor, a chelating agent, and a betaine compound. In the case of a water-soluble ink, these various additives are directly added to the ink solution. In a case where an oil-soluble dye is used in the form of a dispersion, in general, the additives are added to a dye dispersion after the preparation of the dispersion. However, the additives may be added in the form of an oil phase or an aqueous phase during the preparation.

The anti-drying agent is suitably used for the purpose of preventing clogging in an ink ejection port of a nozzle used in an ink jet recording method caused by the drying of the ink jet recording ink.

As the anti-drying agent, a water-soluble organic solvent having a vapor pressure lower than that of water is preferable. Specific examples of the anti-drying agent include polyhydric alcohols represented by ethylene glycol, propylene glycol, diethylene glycol, polyethylene glycol, thiodiglycol, dithiodiglycol, 2-methyl-1,3-propanediol, 1,2,6-hexanetriol, an acetylene glycol derivative, glycerin, and trimethylolpropane, lower alkyl ethers of a polyhydric alcohol such as ethylene glycol monomethyl (or ethyl) ether, diethylene glycol monomethyl (or ethyl) ether, and triethylene glycol monoethyl (or butyl) ether, heterocycles such as 2-pyrrolidone, N-methyl-2-pyrrolidone, 1,3-dimethyl-2-imidazolidinone, and N-ethylmorpholine, sulfur containing compounds such as sulfolane, dimethylsulfoxide, and 3-sulfolene, polyfunctional compounds such as diacetone alcohol and diethanolamine, and urea derivatives. Among these, polyhydric alcohols such as glycerin and diethylene glycol are more preferable. The anti-drying agent may be used alone or two or more kinds thereof may be used in combination. The content of these anti-drying agents in the ink is preferably 10 to 50 mass%.

The penetration enhancer can be used for the purpose of improving the permeation of the ink jet recording ink into paper. As the penetration enhancer, alcohols such as ethanol, isopropanol, butanol, di(tri)ethylene glycol monobutyl ether, and 1,2-hexanediol, sodium lauryl sulfate, sodium oleate, a nonionic surfactant, or the like can be used. In a case where the content of the penetration enhancers in the ink is 5 to 30 mass%, sufficient effects are exhibited in general, and the penetration enhancers are preferably used in an addition amount within the range that does not cause bleeding of a printed image and print-though.

The ultraviolet absorber can be used for the purpose of improving storability of an image. As the ultraviolet absorber, a benzotriazole-based compound described in JP1983-185677A (JP-S58-185677A), JP1986-190537A (JP-S61-190537A), JP1990-782A (JP-H02-782A), JP1993-197075A (JP-H05-197075A), JP1997-34057A (JP-H09-34057A), or the like, a benzophenone-based compound described in JP1971-2784A (JP-S46-2784A), JP1993-194483A (JP-H05-194483A), US3214463A, or the like, a cinnamic acid-based compound described in JP1973-30492B (JP-S48-30492B), JP1981-21141B (JP-S56-21141B), JP1998-88106A (JP-H10-88106A), or the like, a triazine-based compound described in JP1992-298503A (JP-H04-298503A), JP1996-53427A (JP-H08-53427A), JP1996-239368A (JP-H08-239368A), JP1998-182621A (JP-H10-182621A), JP1996-501291A (JP-H08-501291A), or the like, a compound described in Research Disclosure No. 24239, and a so-called fluorescent brightening agent, which is a compound that emits fluorescence upon absorption of an ultraviolet ray, represented by a stilbene-based compound and a benzoxazole-based compound can be used.

The antifading agent is used for the purpose of improving storability of an image. As the antifading agent, various organic antifading agents and metal complex-based antifading agents can be used. Examples of the organic antifading agent include hydroquinones, alkoxyphenols, dialkoxyphenols, phenols, anilines, amines, indanes, chromans, alkoxyanilines, heterocycles, and the like, and examples of a metal complex include a nickel complex, a zinc complex, and the like. More specifically, compounds described in patents cited in Paragraphs I to J in section VII of Research Disclosure No. 17643, Research Disclosure No. 15162, left column on page 650 of Research Disclosure No. 18716, page 527 of Research Disclosure No. 36544, page 872 of Research Disclosure No. 307105, and Research Disclosure No. 15162, and compounds included in Formulas and compound examples of representative compounds described on pages 127 to 137 of JP1987-215272A (JP-S62-215272A) can be used.

Examples of the fungicide include sodium dehydroacetate, sodium benzoate, sodium pyridinethione-1-oxide, p-hydroxybenzoic acid ethyl ester, 1,2-benzisothiazolin-3-one and salts thereof. These fungicides are preferably used in the ink in an amount of 0.02 to 1.00 mass%.

As the pH adjuster, a neutralizing agent (an organic salt group, or an inorganic alkali) can be used. The pH adjuster is preferably added such that the pH of the ink jet recording ink becomes 6 to 10, and is more preferably added such that the pH thereof becomes 7 to 10, for the purpose of improving storage stability of the ink jet recording ink.

Examples of the surface tension adjuster include a nonionic surfactant, a cationic surfactant, or an anionic surfactant. The surface tension of the ink jet recording ink according to the present invention is preferably 25 to 70 mN/m, and more preferably 25 to 60 mN/m. The viscosity of the ink jet recording ink of the present invention is preferably 30 mPa·s or lower. The viscosity is more preferably adjusted to be 20 mPa·s or lower. Preferable examples of the surfactants include an anionic surfactant such as a fatty acid salt, an alkyl sulfuric acid ester salt, alkyl benzene sulfonate, alkyl naphthalene sulfonate, dialkyl sulfosuccinate, an alkyl phosphoric acid ester salt, a naphthalene sulfonic acid formalin condensate, and a polyoxyethylene alkyl sulfuric acid ester salt, and a nonionic surfactant such as polyoxyethylene alkyl ether, polyoxyethylene alkyl allyl ether, polyoxyethylene fatty acid ester, sorbitan fatty acid ester, polyoxyethylene sorbitan fatty acid ester, polyoxyethylene alkylamine, glycerin fatty acid ester, and oxyethylene oxypropylene block copolymer. In addition, SURFYNOLS (Air Products and Chemicals, Inc.), which is an acetylene-based polyoxyethylene oxide surfactant, is preferably used. An amine oxide-type amphoteric surfactant such as N,N-dimethyl-N-alkylamine oxide is also preferably used. It is also possible to use surfactants described on pages 37 and 38 of JP1984-157636A (JP-S59-157636A) and in Research Disclosure No. 308119 (1989).

As the anti-foaming agent, a fluorine-based compound, a silicone-based compound, or a chelating agent represented by EDTA can be used as necessary.

The betaine compound can be used for the purpose of preventing blurring of the image under a high humidity condition. As the betaine compound, a compound exemplified in JP2004-285269A and the like can be preferably used. A preferable range of the addition amount of these betaine compounds differs depending on the kind of the compound,

and it is preferable to use the betaine compound in the ink jet recording ink in an amount of 0.01 to 50 mass%, more preferably in an amount of 0.01 to 20 mass%, and most preferably in an amount of 0.01 to 10 mass%.

In a case where the compound according to the present invention is dispersed in an aqueous medium, it is preferable to disperse colored fine particles containing the compound and an oil-soluble polymer in the aqueous medium as described in JP1999-286637A (JP-H11-286637A), JP2000-78491, JP2000-80259, and JP2000-62370, or it is preferable to disperse the compound of the present invention dissolved in an organic solvent having a high boiling point in the aqueous medium, as shown in JP2000-78454, JP2000-78491, JP2000-203856, and JP2000-203857. In a case where the compound of the present invention is dispersed in an aqueous medium, as a specific method, an oil-soluble polymer to be used, an organic solvent having a high boiling point, additives, and the used amounts of these, those described in the patent publications described above can be preferably used. Alternatively, a solid of the compound according to the present invention may also be dispersed as it is in a fine particle state. During the dispersing, a dispersant or a surfactant can be used. As a dispersion apparatus, a simple stirrer, an impeller stirring system, an inline stirring system, a milling system (for example, a colloid mill, a ball mill, a sand mill, an attritor, a roll mill, an agitator, mill, and the like), an ultrasonic system, and a high-pressure emulsification dispersion system (a high-pressure homogenizer; specific commercially available apparatuses include GAULIN homogenizer, a microfluidizer, DeBEE 2000, and the like) can be used. In addition to the patents described above, the details of the method for preparing the ink jet recording ink are described ins JP1993-148436A (JP-H05-148436A), JP1993-295312A (JP-H05-295312A), JP1995-97541A (JP-H07-97541A), JP1995-82515A (JP-H07-82515A), JP1995-118584A (JP-H07-118584A), JP1999-286637A (JP-H11-286637A), and JP2000-87539 and can be used for the preparation of the ink jet recording ink according to the present invention.

As the aqueous medium, a mixture which contains water as a main component and to which a water-miscible organic solvent is added as desired can be used. Examples of the water-miscible organic solvent include alcohol (for example, methanol, ethanol, propanol, isopropanol, butanol, isobutanol, sec-butanol, t-butanol, pentanol, hexanol, cyclohexanol, and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol), a glycol derivative (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenyl ether), amine (for example, ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethylpropylenediamine), and other polar solvents (for example, formamide, N,N-dimethylformamide, N,N-dimethylacetamide, dimethylsulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone). The water-miscible organic solvents may be used in combination of two or more kinds thereof.

The content of the compound represented by Formula (1) is preferably 0.2 parts by mass to 10 parts by mass and more preferably 1 part by mass to 6 parts by mass with respect to 100 parts by mass of the ink jet recording ink according to the present invention. In addition, in the ink jet recording ink according to the present invention, other coloring agents may be used in combination with the compound represented by Formula (1). In a case where two or more coloring agents are used in combination, it is preferable that the total content of the coloring agents is in the above-described range.

The viscosity of the ink jet recording ink according to the present invention is preferably 30 mPa·s or lower. In addition, the surface tension of the ink for ink jet textile printing according to the present invention is preferably 25 mN/m to 70 mN/m. The viscosity and the surface tension can be adjusted by adding various additives such as a viscosity adjuster, a surface tension adjuster, a specific resistance adjuster, a film conditioner, an ultraviolet absorber, an antioxidant, an antifading agent, a fungicide, a rust inhibitor, a dispersant, and a surfactant.

The ink jet recording ink according to the present invention can be used as any one of various tone inks but is preferably used as a magenta tone ink. In addition, the ink jet recording ink according to the present invention can be used not only for forming a monochromic image but also for forming a full-color image. In order to form a full-color image, a magenta tone ink, a cyan tone ink, and a yellow tone ink can be used. In addition, in order to adjust the tone, a black tone ink may be further used.

As a yellow dye that can be applied, an arbitrary yellow dye can be used. Examples of the dye include an aryl dye or a heterylazo dye having phenols, naphthols, anilines, heterocycles such as pyrazolone and pyridone, open-chain active methylene compounds, and the like as a coupling component (hereinafter, referred to as a coupler component); an azomethine dye having open-chain active methylene compounds and the like as the coupler component; a methine dye such as a benzylidene dye and a monomethine oxonol dye; and a quinone-based dye such as a naphthoquinone dye and an anthraquinone dye. Examples of other types of dyes include a quinophthalone dye, a nitro·nitroso dye, an

acridine dye, and an acridinone dye.

As a magenta dye that can be applied, an arbitrary magenta dye can be used. Examples of the dye include an aryl dye or a heterylazo dye having phenols, naphthols, anilines, and the like as a coupler component; an azomethine dye having pyrazolones, pyrazolotriazoles, and the like as the coupler component; a methine dye such as an arylidene dye, a styryl dye, a merocyanine dye, a cyanine dye, and an oxonol dye; a carbonium dye such as a diphenylmethane dye, a triphenylmethane dye, and a xanthene dye, a quinone dye such as naphthoquinone, anthraquinone, and anthrapyridone, and a fused polycyclic dye such as a dioxazine dye.

As a cyan dye that can be applied, an arbitrary cyan dye can be used. Examples of the dye include an aryl dye or a heterylazo dye having phenols, naphthols, anilines, and the like as a coupler component; an azomethine dye having phenols, naphthols, heterocycles such as pyrrolotriazole, and the like as the coupler component; a polymethine dye such as a cyanine dye, an oxonol dye, and a merocyanine dye; a carbonium dye such as a diphenylmethane dye, a triphenylmethane dye, and a xanthene dye; a phthalocyanine dye; an anthraquinone dye; and an indigo·thioindigo dye.

Each of the dyes described above may exhibit the respective colors of yellow, magenta, and cyan after a part of a chromophore is released first. In this case, the counter cation may be an inorganic cation such as an alkali metal and ammonium, may be an organic cation such as pyridinium and a quaternary ammonium salt, and may be a polymer cation having these cations in a partial structure thereof.

Examples of a black coloring material that can be applied include disazo, trisazo, and tetraazo dyes, as well as a dispersion of carbon black.

The ink jet recording ink according to the present invention can be used in a recording method such as printing, duplicating, marking, writing, drawing, or stamping and is particularly suitable in an ink jet recording method.

[Ink Jet Recording Method]

The present invention relates to an ink jet recording method for forming an image using the coloring composition or the ink jet recording ink according to the present invention.

In the ink jet recording method according to the present invention, energy is applied to the ink jet recording ink to form an image on a well-known image receiving material, that is, plain paper or resin coated paper, for example, ink jet paper, films, electrophotographic common paper, fabric, glass, metal, or ceramic described in JP1996-169172A (JP-H08-169172A), JP1996-27693A (JP-H08-27693A), JP1990-276670A (JP-H02-276670A), JP1995-276789A (JP-H07-276789A), JP1997-323475A (JP-H09-323475A), JP1987-238783A (JP-S62-238783A), JP1998-153989A (JP-H10-153989A), JP1998-217473A (JP-H10-217473A), JP1998-235995A (JP-H10-235995A), JP1998-337947A (JP-H10-337947A), JP1998-217597A, and (JP-H10-217597A).

During the formation of an image, in order to impart glossiness or water fastness or to improve weather fastness, a polymer particle dispersion (also referred to as a polymer latex) may also be used. Regarding the timing when the polymer latex is added to the image receiving material, the addition may be performed before, during, or after the addition of the colorants. Therefore, a position where the addition is performed may be the image receiving paper or the ink. Alternatively, a liquid material consisting only of the polymer latex may be used. Specifically, a method described in, for example, JP2000-363090, JP2000-315231, JP2000-354380, JP2000-343944, JP2000-268952, JP2000-299465, and JP2000-297365, can be preferably used.

[Ink Jet Printer Cartridge and Ink jet recorded material]

An ink cartridge for ink jet recording according to the present invention is filled with the above-described ink jet recording ink according to the present invention. In addition, an ink jet recorded material according to the present invention is obtained by forming a colored image on a recording material using the ink jet recording ink according to the present invention.

Hereinafter, recording paper and a recording film that can be used to perform ink jet printing using the ink jet recording ink according to the present invention will be described.

A support in the recording paper and the recording film is formed of chemical pulp such as LBKP and NBKP, mechanical pulp such as GP, PGW, RMP, TMP, CTMP, CMP, and CGP, and recycled pulp such as DIP. The support manufactured by using various apparatuses such as Fourdrinier paper machine and cylinder paper machine and by mixing in additives such as a pigment, a binder, a sizing agent, a fixing agent, a cationic agent, and a paper strengthening agent known in the related art as necessary can be used. In addition to the supports described above, any one of synthetic paper and plastic film sheet may also be used, and the thickness of the support is desirably 10 to 250 $\mu$m, and the basis weight is desirably 10 to 250 g/$m^2$.

An ink receiving layer and a back coat layer may be provided on the support as they are, or the ink receiving layer and the back coat layer may be provided after size press using starch and polyvinyl alcohol or providing an anchor coat layer. In addition, a flattening treatment may be performed on the support using a calendering apparatus such as

a machine calender, a TG calender, and a soft calender. In the present invention, as the support, paper or plastic film of which both sides are laminated with polyolefin (for example, polyethylene, polystyrene, polyethylene terephthalate, polybutene, and copolymers thereof) is more preferably used.

A white pigment (for example, titanium oxide and zinc oxide) or a tinting dye (for example, cobalt blue, ultramarine blue, and neodymium oxide) is preferably added to the polyolefin.

The ink receiving layer provided on the support contains a pigment or an aqueous binder. As the pigment, a white pigment is preferable, and examples of the white pigment include a white inorganic pigment such as calcium carbonate, kaolin, talc, clay, diatomaceous earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide, and zinc carbonate, an organic pigment such as a styrene-based pigment, an acrylic pigment, a urea resin, and a melamine resin, and the like. As the white pigment contained in the ink receiving layer, a porous inorganic pigment is preferable, and synthetic amorphous silica having a large pore area is particularly suitable. Any one of silicic acid anhydride obtained by a dry production method and hydrous silicic acid obtained by a wet production method can be used as the synthetic amorphous silica, and it is particularly desirable to use hydrous silicic acid.

Examples of the aqueous binder contained in the ink receiving layer include a water-soluble polymer such as polyvinyl alcohol, silanol-modified polyvinyl alcohol, starch, cationized starch, casein, gelatin, carboxymethyl cellulose, hydroxyethyl cellulose, polyvinyl pyrrolidone, polyalkylene oxide, and a polyalkylene oxide derivative, a water-dispersible polymer such as styrene butadiene latex and an acrylic emulsion, and the like. The aqueous binder can be used alone or two or more kinds thereof may be used in combination. Among these binders, polyvinyl alcohol and silanol-modified polyvinyl alcohol are particularly suitably used in the present invention, from the viewpoints of adhesion to the pigment and peeling resistance of the ink receiving layer.

The ink receiving layer can contain a dye mordant, a water resistant additive, a light fastness improver, a surfactant, and other additives, in addition to the pigment and the aqueous binder.

The dye mordant to be added in the ink receiving layer is preferably immobilized, and in order to achieve the immobilization, a polymer dye mordant is preferably used.

The polymer dye mordant is described in JP1973-28325A (JP-S48-28325A), JP1979-74430A (JP-S54-74430A), JP1979-124726A (JP-S54-124726A), JP1980-22766A (JP-S55-22766A), JP1980-142339A (JP-S55-142339A), JP1985-23850A (JP-S60-23850A), JP1985-23851A (JP-S60-23851A), JP1985-23852A (JP-S60-23852A), JP1985-23853A (JP-S60-23853A), JP1985-57836A (JP-S60-57836A), JP1985-60643A (JP-S60-60643A), JP1985-118834A (JP-S60-118834A), JP1985-122940A (JP-S60-122940A), JP1985-122941A (JP-S60-122941A), JP1985-122942A (JP-S60-122942A), JP1985-235134A (JP-S60-235134A), JP1989-161236A (JP-H01-161236A), US2484430A, US2548564A, US3148061A, US3309690A, US4115124A, US4124386A, US4193800A, US4273853A, US4282305A, and US4450224A. An image receiving material including a polymer dye mordant described on pages 212 to 215 of JP1989-161236A (JP-H01-161236A) is particularly preferable. In a case where the polymer dye mordant described in JP1989-161236A (JP-H01-161236A) is used, an image with excellent image quality is obtained, and light fastness of the image is improved.

The water resistant additive is effective in rendering the image resistant to water, and as the water resistant additive, a cationic resin is particularly desirable. Examples of the cationic resin include polyamide polyamine epichlorohydrin, polyethylene imine, polyamine sulfone, a dimethyl diallyl ammonium chloride polymer, cationic polyacrylamide, colloidal silica, and the like, and among these cationic resins, polyamide polyamine epichlorohydrin is particularly suitable. The content of these cationic resins is preferably 1 to 15 mass% and particularly preferably 3 to 10 mass%, with respect to the total solid content of the ink receiving layer.

Examples of the light fastness improver include zinc sulfate, zinc oxide, a hindered amine-based antioxidant, a benzotriazole-based ultraviolet absorber such as benzophenone, and the like. Among these, zinc sulfate is particularly suitable.

The surfactant can function as a coating aid, a peeling property improver, a slipping property improver, or an antistatic agent. The surfactants are described in JP-1987-173463A (JP-S62-173463A) and JP1987-183457A (JP-S62-183457A). An organic fluoro compound may be used instead of the surfactant. The organic fluoro compound is preferably hydrophobic. Examples of the organic fluoro compound include a fluorine-based surfactant, an oil-like fluorine-based compound (for example, fluorine oil), and a solid-like fluorine compound resin (for example, a tetrafluoroethylene resin). The organic fluoro compounds are described in JP1982-9053B (JP-S57-9053B) (columns 8 to 17), JP1986-20994A (JP-S61-20994A), and JP1987-135826A (JP-S62-135826A). Examples of other additives to be added to the ink receiving layer include a dispersing agent, a viscosity improver, an anti-foaming agent, a dye, a fluorescent brightening agent, a preservative, a pH adjuster, a matting agent, a hardening agent, and the like. The ink receiving layer may include one layer or two layers.

The back coat layer can be provided on the recording paper and the recording film, and examples of a component that can be added to the layer include a white pigment, an aqueous binder, and other components. Examples of the white pigment added to the back coat layer include a white inorganic pigment such as light calcium carbonate, heavy

calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudoboehmite, aluminum hydroxide, alumina, lithopone, zeolite, hydrated halloysite, magnesium carbonate, and magnesium hydroxide, an organic pigment such as a styrene-based plastic pigment, an acrylic plastic pigment, polyethylene, a microcapsule, a urea resin, and a melamine resin, and the like.

Examples of the aqueous binder included in the back coat layer include a water-soluble polymer such as a styrene/maleate copolymer, a styrene/acrylate copolymer, polyvinyl alcohol, silanol-modified polyvinyl alcohol, starch, cationized starch, casein, gelatin, carboxymethyl cellulose, hydroxyethyl cellulose, and polyvinyl pyrrolidone, a water-dispersible polymer such as styrene butadiene latex and an acrylic emulsion, and the like. Examples of the other components included in the back coat layer include an anti-foaming agent, a foam inhibitor, a dye, a fluorescent brightening agent, a preservative, a water resistant additive, and the like.

A polymer latex may be added to the constituting layers (including the back coat layer) of the ink jet recording paper and the recording film. The polymer latex is used for the purpose of improving film properties such as dimensional stabilization, prevention of curling, prevention of adhesion, and prevention of cracking in the film. The polymer latex is described in JP1987-245258A (JP-S62-245258A), JP1987-136648A (JP-S62-136648A), and JP1987-110066A (JP-S62-110066A). In a case where a polymer latex having a low glass transition temperature (40°C or lower) is added to a layer including a dye mordant, cracking of the layer or curling can be prevented. In addition, curling can also be prevented by adding a polymer latex having a high glass transition temperature to the back coat layer.

The ink jet recording ink according to the present invention can be used in well-known ink jet recording methods without any particular limitation, for example, an electric charge control method of jetting ink using an electrostatic attraction force, a drop-on-demand method (a pressure pulse method) using a vibration pressure of a piezoelectric element, an acoustic ink jet method of converting an electrical signal into an acoustic beam, irradiating the ink with the acoustic beam, and jetting ink using a radiation pressure, or a thermal ink jet method of heating ink to form bubbles and using a pressure generated from the bubbles. Examples of the ink jet recording method include a method of jetting a plurality of droplets of a low-density ink called photo ink with a small volume, a method of improving image quality using a plurality of inks having substantially the same hue and different densities, and a method of using a colorless and transparent ink.

Examples

Hereinafter, the present invention will be described using examples, but the present invention is not limited to these examples. Unless specified otherwise, "%" and "part(s)" represent "mass%" and "part(s) by mass".

(Synthesis Example)

(Synthesis of Exemplary Compound (1-11))

Exemplary Compound (1-11) can be synthesized, for example, using the following scheme.

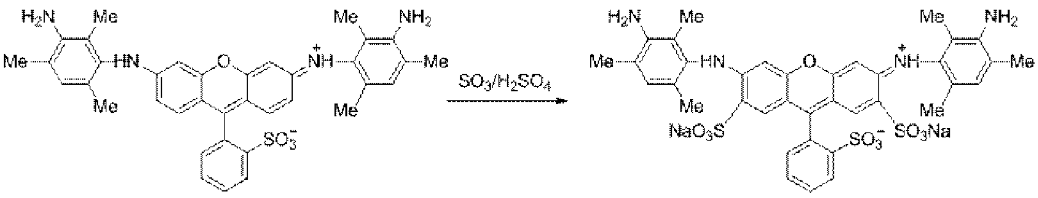


Intermediate (A) Intermediate (B)

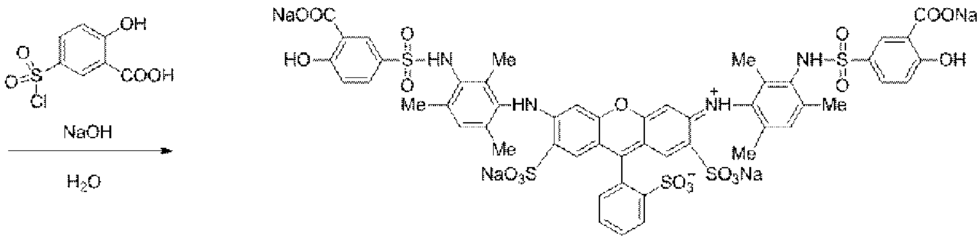


Exemplary Compound (1-11)

(Synthesis of Intermediate (B))

23.0 g of Intermediate (A) (synthesized using the method according to paragraph 0065 on page 17 of JP2011-148973A) was added to 420 g of 10% fuming sulfuric acid to cause a reaction to occur at room temperature for 48 hours. The reaction solution was poured into a large excess of ethyl acetate, and precipitated crystals were separated by filtering. The filtered crystals were dissolved in 500 mL of methanol, the pH was adjusted to 7 using 28% sodium methoxide solution in methanol, and precipitated sodium sulfate was removed by filtration. The filtrate was condensed using a rotary evaporator, and the obtained residue was purified by column chromatography (filler: SEPHADEX LH-20 (manufactured by Pharmacia), developing solvent: methanol) to obtain crystals of Intermediate (B).
Yield amount: 21.0 g
Yield ratio: 68%
MS (m/z)=793 ($[M-2Na+H]^-$, 100%)

(Synthesis of Exemplary Compound (1-11))

3.0 g of Intermediate (B) was dissolved in 15 mL of ultrapure water, and the solution was cooled such that the internal temperature thereof reached 10°C or lower. 2.55 g of 5-chlorosulfonyl salicylic acid (synthesized using a method described in DE264786) was added thereto as a powder, and while the internal temperature thereof was kept at 10°C or lower, the pH of the reaction solution was maintained at 8.0 using 10% NaOH aqueous solution. The dropwise addition was continued until the pH no longer changed. The obtained reaction solution was poured into a large excess of isopropyl alcohol, and precipitated solid was separated by filtering. The obtained solid was dissolved in 20 mL of a mixed solvent of water/methanol: 1/1 and purified by column chromatography (filler: SEPHADEX LH-20 (manufactured by Pharmacia), developing solvent: water/methanol), and then an inorganic salt and a residual organic solvent were removed using a dialysis membrane (molecular weight cutoff: 3500, Spectra/Por3 Dialysis Membrane (trade name, manufactured by SPECTRUM LABORATORIES, INC.)). The pH of the obtained aqueous solution was adjusted to 7 using a diluted sodium hydroxide aqueous solution, dust was removed by filtering using a membrane filter, and the obtained aqueous solution was condensed and dried using a rotary evaporator. As a result, green glossy crystals of Exemplary Compound (1-11) were obtained.
Yield amount: 1.5 g
Yield ratio: 33%
MS (m/z)=1191 ($[M-1]^-$, 100%)

In an absorption spectrum of Exemplary Compound (1-11) in the dilute aqueous solution, the absorption maximum wavelength was 532 nm, and the molar absorption coefficient was 87000. A $^1$H-NMR spectrum of Exemplary Compound (1-11) in dimethylsulfoxide-d6 is shown in Fig. 1.

(Synthesis of Exemplary Compound (1-18))

Exemplary Compound (1-18) can be synthesized, for example, using the following scheme.

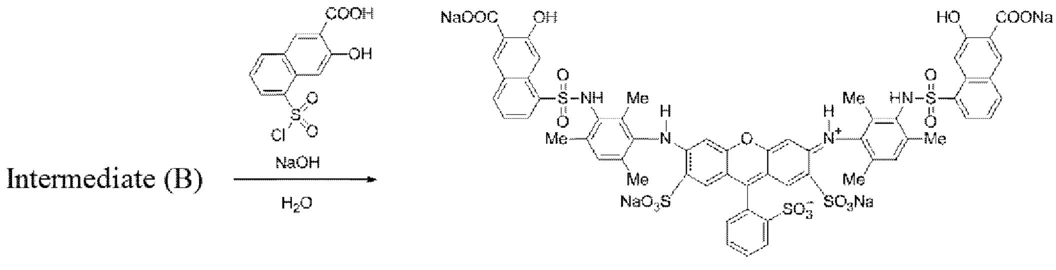


Exemplary Compound (1-18)

3.0 g of Intermediate (B) obtained as the synthetic intermediate of Exemplary Compound (1-11) described above was dissolved in 15 mL of ultrapure water, and the solution was cooled such that the internal temperature thereof reached 10°C or less. 2.2 g of 5-chlorosulfonyl-3-hydroxy-2-naphthoic acid (synthesized using a method described in DE264786) was added thereto as a powder, and while the internal temperature thereof was kept at 10°C or lower, the pH of the reaction solution was maintained at 7.5 using 10% NaOH aqueous solution. The dropwise addition was continued until the pH no longer changed. The obtained reaction solution was poured into a large excess of isopropyl alcohol, and precipitated solid was separated by filtering. The obtained solid was dissolved in 20 mL of a mixed solvent of water/methanol: 1/1 and purified by column chromatography (filler: SEPHADEX LH-20 (manufactured by Pharmacia), developing solvent: water/methanol), and then an inorganic salt and a residual organic solvent were removed using a dialysis membrane (molecular weight cutoff: 3500, Spectra/Por3 Dialysis Membrane (trade name, manufactured by SPECTRUM LABORATORIES, INC.)). The pH of the obtained aqueous solution was adjusted to 7 using a diluted sodium hydroxide aqueous solution, dust was removed by filtering using a membrane filter, and the obtained aqueous solution was condensed and dried using a rotary evaporator. As a result, green glossy crystals of Exemplary Compound (1-18) were obtained.
Yield amount: 1.2 g
Yield ratio: 24%
MS (m/z)=1291 ([M-1]$^-$, 100%)

In an absorption spectrum of Exemplary Compound (1-18) in the dilute aqueous solution, the absorption maximum wavelength was 532 nm, and the molar absorption coefficient was 85000. A $^1$H-NMR spectrum of Exemplary Compound (1-18) in dimethylsulfoxide-d6 is shown in Fig. 2.

(Synthesis of Exemplary Compound (1-25))

Exemplary Compound (1-25) can be synthesized, for example, using the following scheme.

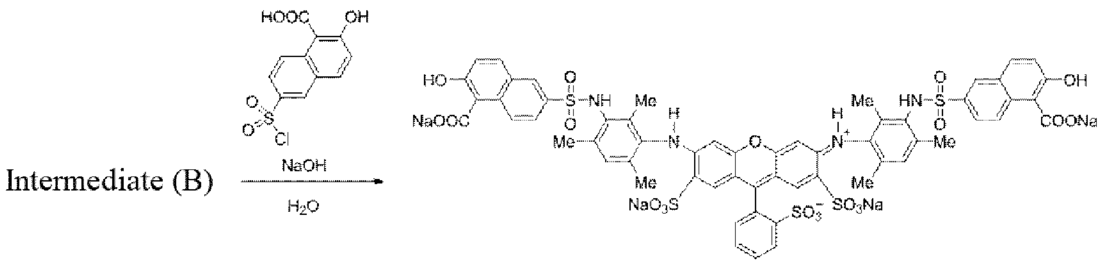


Exemplary Compound (1-25)

3.0 g of Intermediate (B) obtained as the synthetic intermediate of Exemplary Compound (1-11) described above was dissolved in 15 mL of ultrapure water, and the solution was cooled such that the internal temperature thereof reached 10°C or less. 2.2 g of 6-chlorosulfonyl-2-hydroxy-1-naphthoic acid (synthesized using a method described in DE278091) was added thereto as a powder, and while the internal temperature thereof was kept at 10°C or lower, the pH of the reaction solution was maintained at 7.5 using 10% NaOH aqueous solution. The dropwise addition was

continued until the pH no longer changed. The obtained reaction solution was poured into a large excess of isopropyl alcohol, and precipitated solid was separated by filtering. The obtained solid was dissolved in 20 mL of a mixed solvent of water/methanol: 1/1 and purified by column chromatography (filler: SEPHADEX LH-20 (manufactured by Pharmacia), developing solvent: water/methanol), and then an inorganic salt and a residual organic solvent were removed using a dialysis membrane (molecular weight cutoff: 3500, Spectra/Por3 Dialysis Membrane (trade name, manufactured by SPECTRUM LABORATORIES, INC.)). The pH of the obtained aqueous solution was adjusted to 7 using a diluted sodium hydroxide aqueous solution, dust was removed by filtering using a membrane filter, and the obtained aqueous solution was condensed and dried using a rotary evaporator. As a result, green glossy crystals of Exemplary Compound (1-25) were obtained.
Yield amount: 1.3 g
Yield ratio: 26%
MS (m/z)=1291 ([M-1]$^-$, 100%)

In an absorption spectrum of Exemplary Compound (1-25) in the dilute aqueous solution, the absorption maximum wavelength was 532 nm, and the molar absorption coefficient was 83000.

(Synthesis of Exemplary Compound (1-26))

Exemplary Compound (1-26) can be synthesized, for example, using the following scheme.

Intermediate (B)

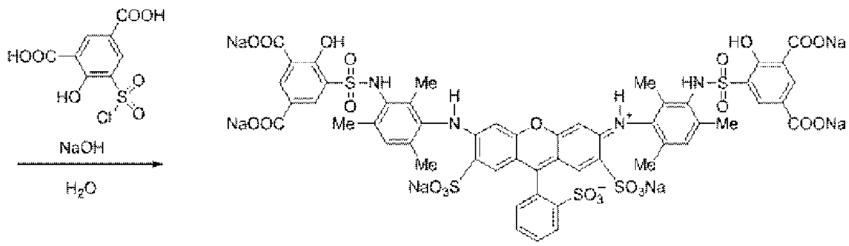


Exemplary Compound (1-26)

3.0 g of Intermediate (B) obtained as the synthetic intermediate of Exemplary Compound (1-11) described above was dissolved in 15 mL of ultrapure water, and the solution was cooled such that the internal temperature thereof reached 10°C or less. 2.7 g of 5-chlorosulfonyl-4-hydroxyisophthalic acid (synthesized using a method described in DE264786) was added thereto as a powder, and while the internal temperature thereof was kept at 10°C or lower, the pH of the reaction solution was maintained at 7.5 using 10% NaOH aqueous solution. The dropwise addition was continued until the pH no longer changed. The obtained reaction solution was poured into a large excess of isopropyl alcohol, and precipitated solid was separated by filtering. The obtained solid was dissolved in 20 mL of a mixed solvent of water/methanol: 1/1 and purified by column chromatography (filler: SEPHADEX LH-20 (manufactured by Pharmacia), developing solvent: water/methanol), and then an inorganic salt and a residual organic solvent were removed using a dialysis membrane (molecular weight cutoff: 3500, Spectra/Por3 Dialysis Membrane (trade name, manufactured by SPECTRUM LABORATORIES, INC.)). The pH of the obtained aqueous solution was adjusted to 7 using a diluted sodium hydroxide aqueous solution, dust was removed by filtering using a membrane filter, and the obtained aqueous solution was condensed and dried using a rotary evaporator. As a result, green glossy crystals of Exemplary Compound (1-26) were obtained.
Yield amount: 1.8 g
Yield ratio: 36%
MS (m/z)=1279 ([M-1]$^-$, 100%)

In an absorption spectrum of Exemplary Compound (1-26) in the dilute aqueous solution, the absorption maximum wavelength was 534 nm, and the molar absorption coefficient was 95000. A $^1$H-NMR spectrum of Exemplary Compound (1-26) in dimethylsulfoxide-d6 is shown in Fig. 3.

(Synthesis of Exemplary Compound (1-1))

Exemplary Compound (1-1) can be synthesized, for example, using the following scheme.

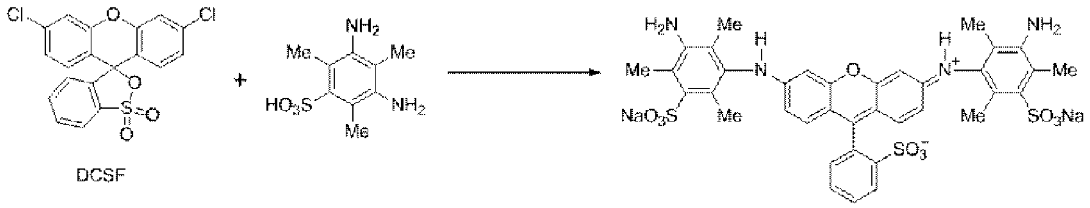

DCSF

Intermediate (C)

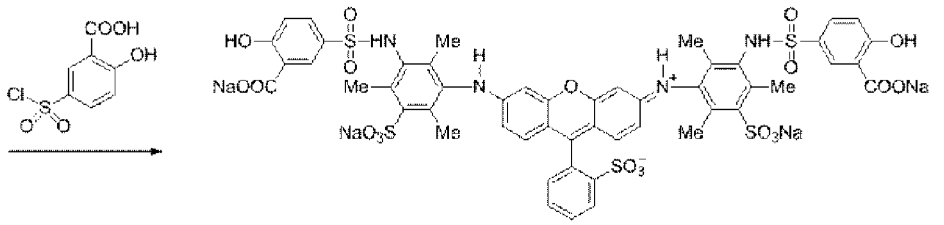

Exemplary Compound (1-1)

[Synthesis of Intermediate (C)]

20 g of dichlorosulfophthalein (manufactured by Chugai kasei Co., Ltd., DCSF (trade name)), 46 g of 2,4-diaminomesitylene-6-sulfonic acid, 30 g of diazabicycloundecene (DBU), and 6.7 g of zinc chloride were added to 250 g of ethylene glycol to cause a reaction to occur at 150°C for 6 hours. The obtained reaction solution was cooled to room temperature and was poured into 1 L of acetonitrile. The obtained crystals were purified by column chromatography (filler: SEPHADEX LH-20 (manufactured by Pharmacia), developing solvent: water/methanol) to obtain Intermediate (C).
Yield amount: 7.7 g
Yield ratio: 19%
MS (m/z)=836 ($[M-1]^-$, 100%)

(Synthesis of Exemplary Compound (1-1))

3.0 g of Intermediate (C) was dissolved in 15 mL of ultrapure water, and the solution was cooled such that the internal temperature thereof reached 10°C or less. 2.55 g of 5-chlorosulfonyl salicylic acid (synthesized using a method described in DE264786) was added thereto as a powder, and while the internal temperature thereof was kept at 10°C or lower, the pH of the reaction solution was maintained at 8.0 using 10% NaOH aqueous solution. The dropwise addition was continued until the pH no longer changed. The obtained reaction solution was poured into a large excess of isopropyl alcohol, and precipitated solid was separated by filtering. The obtained solid was dissolved in 20 mL of a mixed solvent of water/methanol: 1/1 and purified by column chromatography (filler: SEPHADEX LH-20 (manufactured by Pharmacia), developing solvent: water/methanol), and then an inorganic salt and a residual organic solvent were removed using a dialysis membrane (molecular weight cutoff: 3500, Spectra/Por3 Dialysis Membrane (trade name, manufactured by SPECTRUM LABORATORIES, INC.)). The pH of the obtained aqueous solution was adjusted to 7 using a diluted sodium hydroxide aqueous solution, dust was removed by filtering using a membrane filter, and the obtained aqueous solution was condensed and dried using a rotary evaporator. As a result, green glossy crystals of Exemplary Compound (1-1) were obtained.
Yield amount: 1.3 g
Yield ratio: 28%
MS (m/z)=1191 ($[M-1]^-$, 100%)

In an absorption spectrum of Exemplary Compound (1-1) in the dilute aqueous solution, the absorption maximum wavelength was 531 nm, and the molar absorption coefficient was 90000.

Other Exemplary Compounds can be synthesized using the above-described method.

[Example 1]

Deionized water was added to the following components such that the total mass of the mixture becomes 100 g, and then the mixture was stirred for 1 hour while being heated at 30°C to 40°C. Next, the pH of the solution thus

obtained was adjusted to 9 using 10 mol/L sodium hydroxide aqueous solution, and the solution was filtered under reduced pressure through a microfilter having an average pore size of 0.25 μm. As a result, an ink solution 1 for magenta was prepared.

Composition of ink solution 1:

| | |
|---|---|
| Dye (Exemplary Compound (1-1)) | 3.50 g |
| Diethylene glycol | 10.65 g |
| Glycerin | 14.70 g |
| Diethylene glycol monobutyl ether | 12.70 |
| Triethanolamine | 0.65 g |
| OLFINE E 1010 (manufactured by Nissin Chemical Co., Ltd.) | 0.9 g |

[Examples 2 to 14 and Comparative Examples 1 and 2]

Ink solutions obtained by using Comparative Compound 1 and Comparative Compound 2 shown below were prepared as ink solutions 2 to 14 and ink solutions for comparison respectively, in the same manner as in the preparation of ink solution 1, except that the dye was changed as shown in Table 1 below.

The prepared ink solutions 1 to 14 and ink solutions for comparison 1 and 2 were used as ink jet recording inks.

(Image Recording and Evaluation)

The ink jet recording inks according to Examples and Comparative Examples were evaluated as follows. The results are shown in Table 1.

In Table 1, saturation and light fastness were evaluated after each of the ink jet recording inks were loaded into an ink cartridge and an image was recorded on photo glossy paper (PHOTO PAPER PRO PT-201 (trade name), manufactured by Canon Inc.) using an ink jet printer (PIXUS iP8600 (trade name), manufactured by Canon Inc.). Moisture fastness was evaluated in the same manner described above, except that the paper was changed to photo glossy paper (PHOTO PAPER GLOSSY GOLD GL-101 (trade name), manufactured by Canon Inc.).

<Saturation>

Saturation (C*) of a recorded material was calculated using the following expression, based on the measurement of chromatic characteristics. In a printed image area at an applied voltage of 50%, brightness L* and chromaticity a* and b* in CIE L*a*b* color system (International Commission on Illumination standard (1976)/or JIS standard Z8781-4:2013) were measured using a reflection densitometer (trade name X-Rite 310 TR, manufactured by X-Rite, Incorporated.), saturation (C*) was obtained from the obtained values using the following calculation expression, and evaluation was performed based on the following criteria.

$$\text{Saturation } (C^*) = (a^{*2} + b^{*2})^{1/2}$$

A: C* was 90 or higher
B: C* was 80 or higher and lower than 90
C: C* was lower than 80

<Light Fastness>

Image density Ci immediately after recording was measured, and then the image was irradiated with xenon light (100000 lux) using a weather meter (ATLAS C.165) for 7 days. Thereafter, image density Cf was measured, and the residual ratio of a coloring agent (Cf/Ci×100%) was calculated from the image densities before and after the xenon light irradiation, so as to perform evaluation. The image density was measured using a reflection densitometer (trade name X-Rite 310 TR, manufactured by X-Rite, Incorporated.). The residual ratio of a coloring agent was measured using the image area of which the initial image density was 1.0±0.2.

Relict Optical Density (ROD) was obtained from the following expression and was evaluated based on the following criteria.

$$ROD\ (\%)=(D/D0)\times 100$$

D: Optical Density (OD) after exposure test
D0: OD before exposure test
AA: ROD was 95% or higher
A: ROD was 90% or higher and lower than 95%
B: ROD was 80% or higher and lower than 90%
C: ROD was lower than 80%

<Moisture Fastness>

As for blurring of an image under a high humidity condition, a printing pattern having a size of 3 cm×3 cm was prepared, on which magenta squares having a size of 1 mm×1 mm were disposed such that a 0.5 mm white gap was formed between the squares, the image sample was stored under the conditions of a temperature of 25°C and a relative humidity of 90% for 168 hours, and then the blurring of the magenta dye in the white gap was observed.

Specifically, the OD values of a printed material before and after the exposure to the above-described high humidity condition were measured using a reflection densitometer "Spectrolino" (trade name: manufactured by GretagMacbeth GmbH), and in a status A green filter, a case where the magenta density increase in the white area immediately after printing was less than 0.02 was evaluated as A, a case where the magenta density increase was 0.02 or more and less than 0.05 was evaluated as B, a case where the magenta density increase was 0.05 or more and less than 0.10 was evaluated as C, and a case where the magenta density increase was 0.10 or more was evaluated as D.

(Evaluation of Storage Stability of Ink)

Evaluation of the storage stability of the ink jet recording inks prepared in Examples 1 to 14 was performed under the conditions of a temperature of 60°C and a duration of 14 days. The results confirmed that precipitation or degradation of the dye did not occur, and the performances were guaranteed even after a long-term storage.

[Table 1]

| | Dye compound | Saturation | Light fastness | Moisture fastness |
|---|---|---|---|---|
| Example 1 | (1-1) | A | B | A |
| Example 2 | (1-4) | A | A | A |
| Example 3 | (1-6) | A | B | A |
| Example 4 | (1-8) | A | B | A |
| Example 5 | (1-11) | A | A | A |
| Example 6 | (1-12) | A | A | A |
| Example 7 | (1-15) | A | A | A |
| Example 8 | (1-17) | A | A | A |
| Example 9 | (1-18) | A | A | A |
| Example 10 | (1-19) | A | A | B |
| Example 11 | (1-20) | A | A | A |
| Example 12 | (1-25) | A | A | A |
| Example 13 | (1-26) | A | AA | A |
| Example 14 | (1-29) | A | A | A |
| Comparative Example 1 | (Comparative Compound 1) | B | B | D |
| Comparative Example 2 | (Comparative Compound 2) | C | C | C |

As seen from the results of Table 1, it was found that the inks of Examples that use the compound according

to the present invention were excellent in all of saturation, light fastness, and moisture fastness.

(Comparative Compound 1)

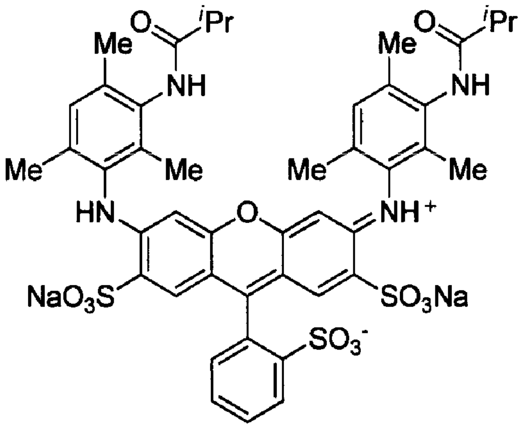

(Comparative Compound 2)

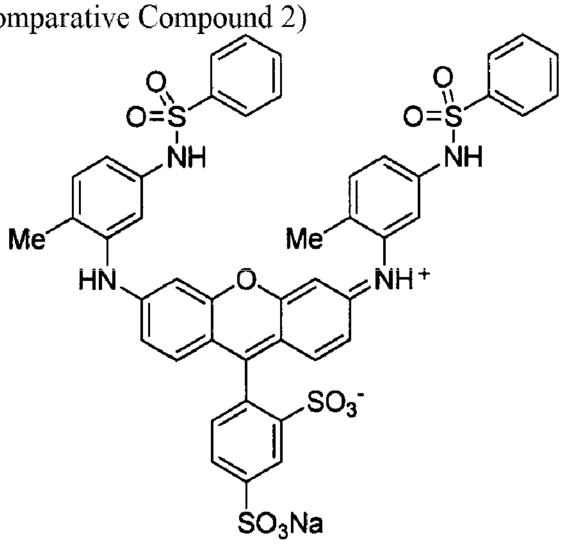

[Example 15]

Deionized water was added to the following components such that the total mass of the mixture becomes 100 g, and then the mixture was stirred for 1 hour while being heated at 30°C to 40°C. Next, the pH of the solution thus obtained was adjusted to 9 using 10 mol/L sodium hydroxide aqueous solution, and the solution was filtered under reduced pressure through a microfilter having an average pore size of 0.25 μm. As a result, an ink solution 15 was prepared.

Composition of ink solution 15:

| | |
|---|---|
| Dye (Exemplary Compound (1-26)) | 3.50 g |
| Diethylene glycol | 10.65 g |
| Glycerin14.70 g | |
| Diethylene glycolmonobutyl ether | 12.70 g |
| Triethanolamine | 0.65 g |
| OLFINE E 1010 (manufactured by Nissin Chemical Co., Ltd.) | 0.9 g |
| 20 mass% aqueous solution of Compound W | 10.00 g |

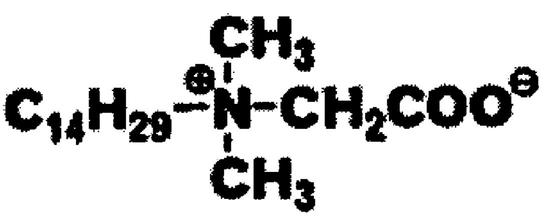

Compound W

Using the ink solution 15 and, for comparison, the ink solution 13 which does not include a betaine compound, image recording and moisture fastness were evaluated. Image recording was performed in the same manner described above, except that the photo glossy paper described above (PHOTO PAPER GLOSSY GOLD GL-101 (trade name), manufactured by Canon Inc.) was changed to photo paper (PHOTO PAPER <GLOSSY> (trade name), manufactured by Seiko Epson Corp.). The obtained recorded image was exposed to the conditions of the moisture fastness test described above, and then visual evaluation of blurring of the image was performed. The results confirmed that the image recorded with the ink solution 15 obtained by adding the betaine compound showed reduced blurring compared to the image recorded with the ink solution 13 to which a betaine compound was not added.

The compound according to the present invention can form an image having high saturation and excellent light

fastness and moisture fastness. In addition, a coloring composition including the compound, an ink jet recording ink, an ink jet recording method using the ink jet recording ink, an ink jet printer cartridge, and an ink jet recorded material can be obtained.

## Claims

**1.** A compound represented by Formula (1),

Formula (1)

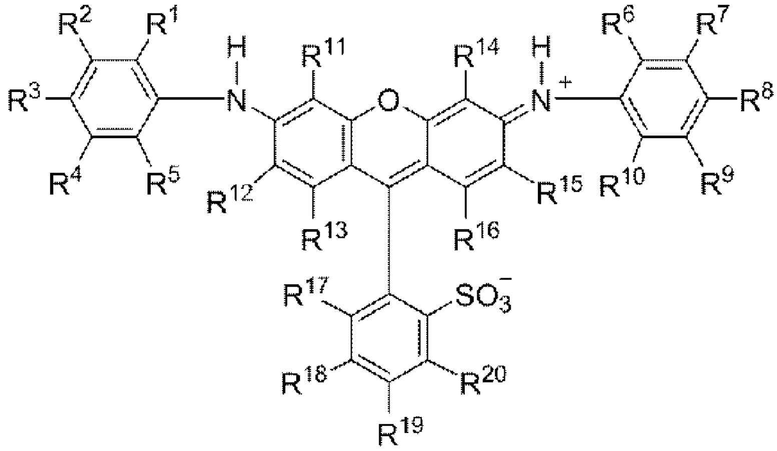

in Formula (1), $R^1$, $R^5$, $R^6$, and $R^{10}$ each independently represent an alkyl group having 1 to 6 carbon atoms; $R^3$ and $R^8$ each independently represent an alkyl group having 1 to 6 carbon atoms; $R^4$, $R^9$, $R^{12}$ and $R^{15}$ each independently represent a hydrogen atom or a sulfo group, wherein at least one of $R^4$, $R^9$, $R^{12}$, or $R^{15}$ represents a sulfo group; $R^{11}$, $R^{13}$, $R^{14}$, $R^{16}$, $R^{17}$, $R^{18}$, $R^{19}$, and $R^{20}$ each represent a hydrogen atom; $R^2$ and $R^7$ each independently represent a hydrogen atom, an alkyl group, or a substituent represented by Formula (A), and at least one of $R^2$ and $R^7$ represents a substituent represented by Formula (A),

Formula (A)

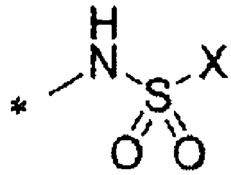

in Formula (A), X represents a substituent represented by Formula (X1), Formula (X2), or Formula (X3); and * represents a bond bonded to a benzene ring,

Formula (X1)

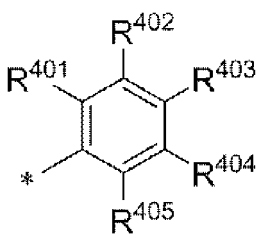

in Formula (X1), $R^{401}$, $R^{402}$, $R^{403}$, $R^{404}$, and $R^{405}$ each independently represent a hydrogen atom or a substituent selected from an alkyl group having 1 to 6 carbon atoms, an alkoxy group having 1 to 6 carbon atoms, a hydroxyl group, a carboxyl group, a chlorine atom, a nitro group, and a trifluoromethyl group, provided that at least one of $R^{401}$, $R^{402}$, $R^{403}$, $R^{404}$, or $R^{405}$ represents a hydroxyl group, and at least one of $R^{401}$, $R^{402}$, $R^{403}$, $R^{404}$, or $R^{405}$ represents a carboxyl group; and * represents a bond bonded to a sulfur atom;

Formula (X2)

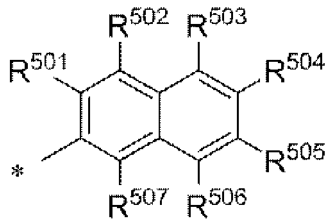

in Formula (X2), $R^{501}$, $R^{502}$, $R^{503}$, $R^{504}$, $R^{505}$, $R^{506}$, and $R^{507}$ each independently represent a hydrogen atom or a substituent selected from an alkyl group having 1 to 6 carbon atoms, an alkoxy group having 1 to 6 carbon atoms, a carboxyl group or a hydroxy group, provided that at least one of $R^{501}$, $R^{502}$, $R^{503}$, $R^{504}$, $R^{505}$, $R^{506}$, or $R^{507}$ represents a hydroxyl group, and at least one of $R^{501}$, $R^{502}$, $R^{503}$, $R^{504}$, $R^{505}$, $R^{506}$, or $R^{507}$ represents a carboxyl group; and * represents a bond bonded to a sulfur atom; and

Formula (X3)

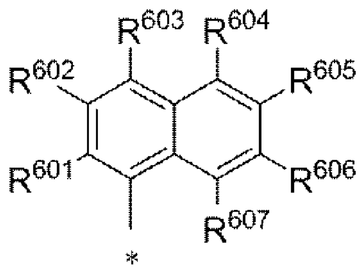

in Formula (X3), $R^{601}$, $R^{602}$, $R^{603}$, $R^{604}$, $R^{605}$, $R^{606}$, and $R^{607}$ each independently represent a hydrogen atom or a substituent selected from an alkyl group having 1 to 6 carbon atoms, an alkoxy group having 1 to 6 carbon atoms, a hydroxyl group and a carboxyl group, provided that at least one of $R^{601}$, $R^{602}$, $R^{603}$, $R^{604}$, $R^{605}$, $R^{606}$, or $R^{607}$ represents a hydroxyl group, and at least one of $R^{601}$, $R^{602}$, $R^{603}$, $R^{604}$, $R^{605}$, $R^{606}$, or $R^{607}$ represents a carboxyl group; and * represents a bond bonded to a sulfur atom.

**2.** The compound according to claim 1,
wherein Formula (1) is represented by Formula (2),

Formula (2)

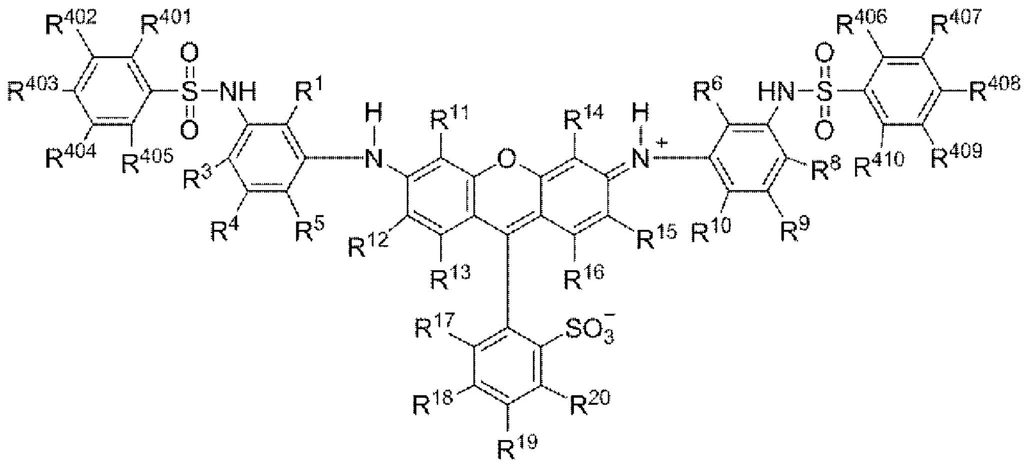

in Formula (2), $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{401}$, $R^{402}$, $R^{403}$, $R^{404}$, and $R^{405}$ are as defined in claim 1; and
$R^{406}$, $R^{407}$, $R^{408}$, $R^{409}$, and $R^{410}$ each independently represent a hydrogen atom or a substituent selected from an alkyl group having 1 to 6 carbon atoms, an alkoxy group having 1 to 6 carbon atoms, a hydroxyl group, a carboxyl group, a chlorine atom, a nitro group, and a trifluoromethyl group, provided that at least one of $R^{406}$, $R^{407}$, $R^{408}$, $R^{409}$, or $R^{410}$ represents a hydroxyl group, and at least one of $R^{406}$, $R^{407}$, $R^{408}$, $R^{409}$, or $R^{410}$ represents a carboxyl group.

**3.** The compound according to claim 1,
wherein Formula (1) is represented by Formula (3),

Formula (3)

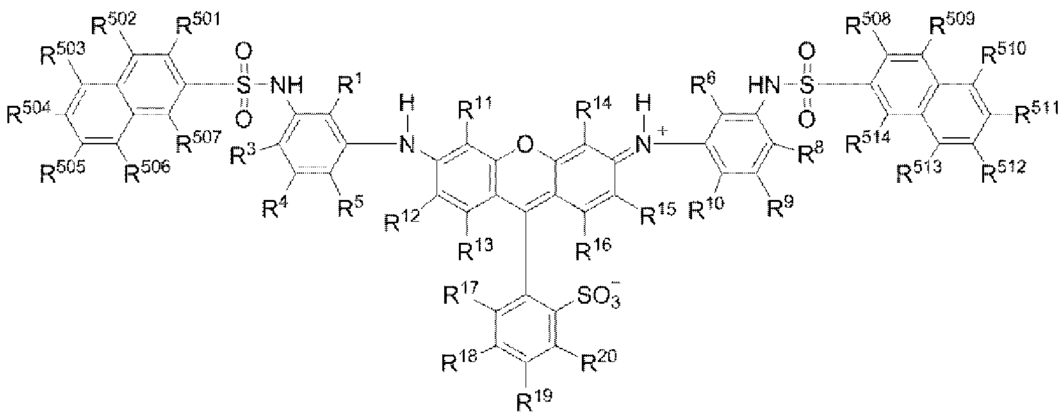

in Formula (3), $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{501}$, $R^{502}$, $R^{503}$, $R^{504}$, $R^{505}$, $R^{506}$, and $R^{507}$ are as defined in claim 1; and
$R^{508}$, $R^{509}$, $R^{510}$, $R^{511}$, $R^{512}$, $R^{513}$, and $R^{514}$ each independently represent a hydrogen atom or a substituent selected from an alkyl group having 1 to 6 carbon atoms, an alkoxy group having 1 to 6 carbon atoms, a carboxyl group or a hydroxy group, provided that at least one of $R^{508}$, $R^{509}$, $R^{510}$, $R^{511}$, $R^{512}$, $R^{513}$, or $R^{514}$ represents a hydroxyl group, and at least one of $R^{508}$, $R^{509}$, $R^{510}$, $R^{511}$, $R^{512}$, $R^{513}$, or $R^{514}$ represents a carboxyl group.

**4.** The compound according to claim 1,
wherein Formula (1) is represented by Formula (4),

Formula (4)

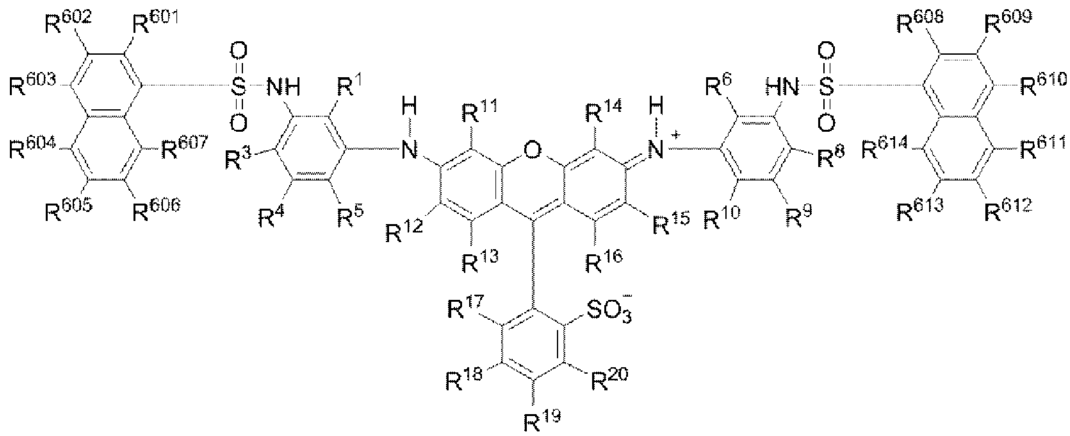

in Formula (4), $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{601}$, $R^{602}$, $R^{603}$, $R^{604}$, $R^{605}$, $R^{606}$, and $R^{607}$ are as defined in claim 1; and $R^{608}$, $R^{609}$, $R^{610}$, $R^{611}$, $R^{612}$, $R^{613}$, and $R^{614}$ each independently represent a hydrogen atom or a substituent selected from an alkyl group having 1 to 6 carbon atoms, an alkoxy group having 1 to 6 carbon atoms, a hydroxyl group and a carboxyl group, provided that at least one of $R^{608}$, $R^{609}$, $R^{610}$, $R^{611}$, $R^{612}$, $R^{613}$, or $R^{614}$ represents a hydroxyl group, and at least one of $R^{608}$, $R^{609}$, $R^{610}$, $R^{611}$, $R^{612}$, $R^{613}$, or $R^{614}$ represents a carboxyl group.

**5.** The compound according to claim 2, wherein $R^{401}$ and $R^{406}$ each independently represent a hydroxyl group.

**6.** A coloring composition comprising: the compound according to any one of claims 1 to 5.

**7.** An ink jet recording ink comprising: the compound according to any one of claims 1 to 5.

**8.** An ink jet recording method using the ink jet recording ink according to claim 7.

**9.** An ink jet printer cartridge which is filled with the ink jet recording ink according to claim 7.

**10.** An ink jet recorded material which is obtained by forming a colored image on a recording material using the ink jet recording ink according to claim 7.

**Patentansprüche**

**1.** Verbindung, dargestellt durch Formel (1),

Formel (1)

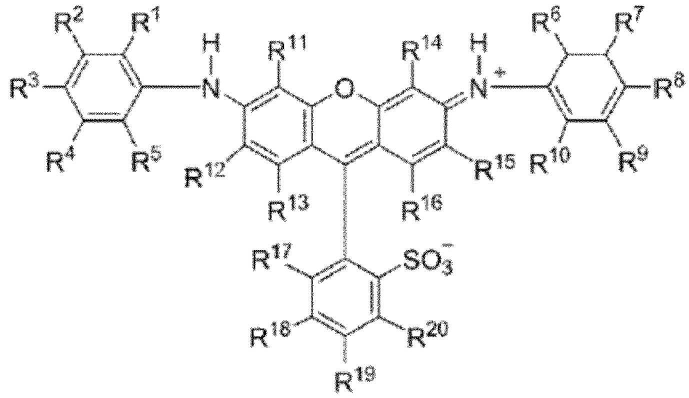

wobei in Formel (1) $R^1$, $R^5$, $R^6$ und $R^{10}$ jeweils unabhängig eine Alkylgruppe mit 1 bis 6 Kohlenstoffatomen darstellen;
$R^3$ und $R^8$ jeweils unabhängig eine Alkylgruppe mit 1 bis 6 Kohlenstoffatomen darstellen;
$R^4$, $R^9$, $R^{12}$ und $R^{15}$ jeweils unabhängig ein Wasserstoffatom oder eine Sulfogruppe darstellen, wobei mindestens einer von $R^4$, $R^9$, $R^{12}$ und $R^{15}$ eine Sulfogruppe darstellt;
$R^{11}$, $R^{13}$, $R^{14}$, $R^{16}$, $R^{17}$, $R^{18}$, $R^{19}$ und $R^{20}$ jeweils ein Wasserstoffatom darstellen;
$R^2$ und $R^7$ jeweils unabhängig ein Wasserstoffatom, eine Alkylgruppe oder einen Substituenten, dargestellt durch Formel (A), darstellen, und mindestens einer von $R^2$ und $R^7$ einen Substituenten, dargestellt durch Formel (A), darstellt,

Formel (A)

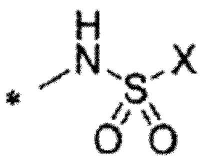

wobei in Formel (A) X einen Substituenten darstellt, dargestellt durch Formel (X1), Formel (X2) oder Formel (X3); und * eine an einen Benzolring gebundene Bindung darstellt,

Formel (X1)

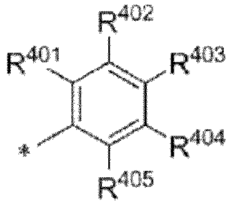

wobei in Formel (X1) $R^{401}$, $R^{402}$, $R^{403}$, $R^{404}$ und $R^{405}$ jeweils unabhängig ein Wasserstoffatom oder einen Substituenten darstellen, ausgewählt aus einer Alkylgruppe mit 1 bis 6 Kohlenstoffatomen, einer Alkoxygruppe mit 1 bis 6 Kohlenstoffatomen, einer Hydroxylgruppe, einer Carboxylgruppe, einem Chloratom, einer Nitrogruppe und einer Trifluormethylgruppe, vorausgesetzt, dass mindestens einer von $R^{401}$, $R^{402}$, $R^{403}$, $R^{404}$ oder $R^{405}$ eine Hydroxylgruppe darstellt und mindestens einer von $R^{401}$, $R^{402}$, $R^{403}$, $R^{404}$ oder $R^{405}$ eine Carboxylgruppe darstellt; und * eine an ein Schwefelatom gebundene Bindung darstellt;

Formel (X2)

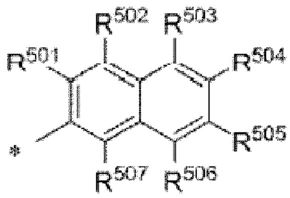

wobei in Formel (X2) $R^{501}$, $R^{502}$, $R^{503}$, $R^{504}$, $R^{505}$, $R^{506}$ und $R^{507}$ jeweils unabhängig ein Wasserstoffatom oder einen Substituenten darstellen, ausgewählt aus einer Alkylgruppe mit 1 bis 6 Kohlenstoffatomen, einer Alkoxygruppe mit 1 bis 6 Kohlenstoffatomen, einer Carboxylgruppe oder einer Hydroxygruppe, vorausgesetzt, dass mindestens einer von $R^{501}$, $R^{502}$, $R^{503}$, $R^{504}$, $R^{505}$, $R^{506}$ oder $R^{507}$ eine Hydroxylgruppe darstellt und mindestens einer von $R^{501}$, $R^{502}$, $R^{503}$, $R^{504}$, $R^{505}$, $R^{506}$ oder $R^{507}$ eine Carboxylgruppe darstellt; und * eine an ein Schwefelatom gebundene Bindung darstellt; und

Formel (X3)

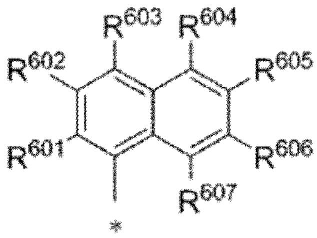

wobei in Formel (X3) $R^{601}$, $R^{602}$, $R^{603}$, $R^{604}$, $R^{605}$, $R^{606}$ und $R^{607}$ jeweils unabhängig ein Wasserstoffatom oder einen Substituenten darstellen, ausgewählt aus einer Alkylgruppe mit 1 bis 6 Kohlenstoffatomen, einer Alkoxygruppe mit 1 bis 6 Kohlenstoffatomen, einer Hydroxylgruppe und einer Carboxylgruppe, vorausgesetzt, dass mindestens einer von $R^{601}$, $R^{602}$, $R^{603}$, $R^{604}$, $R^{605}$, $R^{606}$ oder $R^{607}$ eine Hydroxylgruppe darstellt und mindestens einer von $R^{601}$, $R^{602}$, $R^{603}$, $R^{604}$, $R^{605}$, $R^{606}$ oder $R^{607}$ eine Carboxylgruppe darstellt; und * eine an ein Schwefelatom gebundene Bindung darstellt.

**2.** Verbindung nach Anspruch 1,
wobei Formel (1) durch Formel (2) dargestellt wird,

Formel (2)

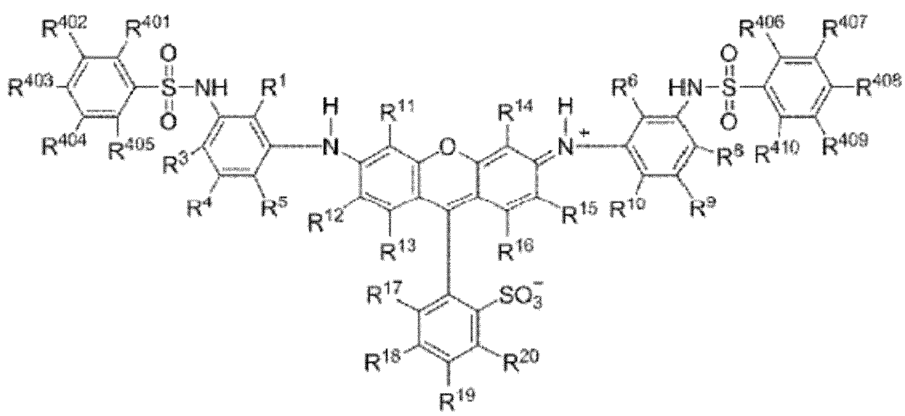

wobei in Formel (2) $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{401}$, $R^{402}$, $R^{403}$, $R^{404}$ und $R^{405}$ wie in Anspruch 1 definiert sind; und
$R^{406}$, $R^{407}$, $R^{408}$, $R^{409}$ und $R^{410}$ jeweils unabhängig ein Wasserstoffatom oder einen Substituenten darstellen, ausgewählt aus einer Alkylgruppe mit 1 bis 6 Kohlenstoffatomen, einer Alkoxygruppe mit 1 bis 6 Kohlenstoffatomen, einer Hydroxylgruppe, einer Carboxylgruppe, einem Chloratom, einer Nitrogruppe und einer Trifluormethylgruppe, vorausgesetzt, dass mindestens einer von $R^{406}$, $R^{407}$, $R^{408}$, $R^{409}$ oder $R^{410}$ eine Hydroxylgruppe darstellt und mindestens einer von $R^{406}$, $R^{407}$, $R^{408}$, $R^{409}$ oder $R^{410}$ eine Carboxylgruppe darstellt.

**3.** Verbindung nach Anspruch 1,
wobei Formel (1) durch Formel (3) dargestellt wird,

Formel (3)

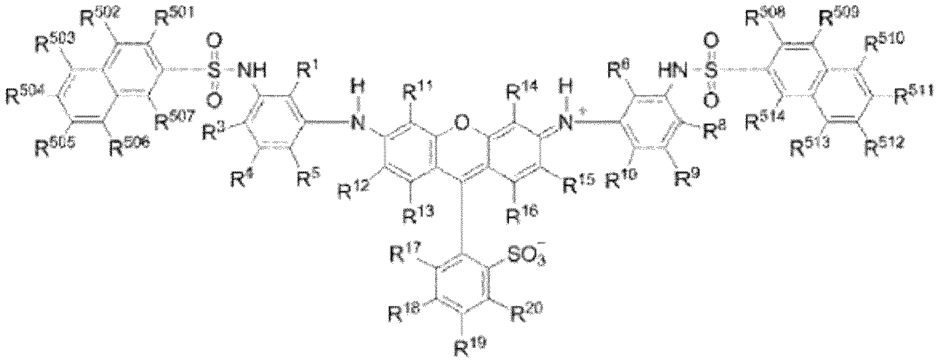

wobei in Formel (3) $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{501}$, $R^{502}$, $R^{503}$, $R^{504}$, $R^{505}$, $R^{506}$ und $R^{507}$ wie in Anspruch 1 definiert sind; und
$R^{508}$, $R^{509}$, $R^{510}$, $R^{511}$, $R^{512}$, $R^{513}$ und $R^{514}$ jeweils unabhängig ein Wasserstoffatom oder einen Substituenten darstellen, ausgewählt aus einer Alkylgruppe mit 1 bis 6 Kohlenstoffatomen, einer Alkoxygruppe mit 1 bis 6 Kohlenstoffatomen, einer Carboxylgruppe oder einer Hydroxygruppe, vorausgesetzt, dass mindestens einer von $R^{508}$, $R^{509}$, $R^{510}$, $R^{511}$, $R^{512}$, $R^{513}$ oder $R^{514}$ eine Hydroxylgruppe darstellt und mindestens einer von $R^{508}$, $R^{509}$, $R^{510}$, $R^{511}$, $R^{512}$, $R^{513}$ oder $R^{514}$ eine Carboxylgruppe darstellt.

**4.** Verbindung nach Anspruch 1, wobei Formel (1) durch Formel (4) dargestellt wird,

Formel (4)

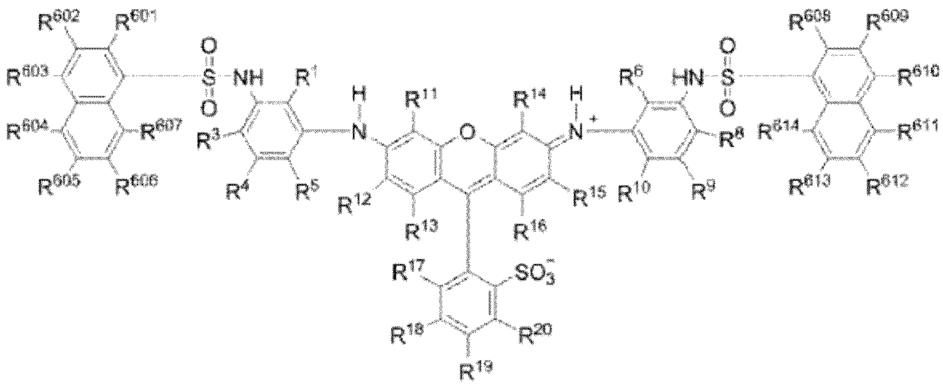

wobei in Formel (4) $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{601}$, $R^{602}$, $R^{603}$, $R^{604}$, $R^{605}$, $R^{606}$ und $R^{607}$ wie in Anspruch 1 definiert sind; und
$R^{608}$, $R^{609}$, $R^{610}$, $R^{611}$, $R^{612}$, $R^{613}$ und $R^{614}$ jeweils ein Wasserstoffatom oder einen Substituenten darstellen, ausgewählt aus einer Alkylgruppe mit 1 bis 6 Kohlenstoffatomen, einer Alkoxygruppe mit 1 bis 6 Kohlenstoffatomen, einer Hydroxylgruppe und einer Carboxylgruppe, vorausgesetzt, dass mindestens einer von $R^{608}$, $R^{609}$, $R^{610}$, $R^{611}$, $R^{612}$, $R^{613}$ oder $R^{614}$ eine Hydroxylgruppe darstellt und mindestens einer von $R^{608}$, $R^{609}$, $R^{610}$, $R^{611}$, $R^{612}$, $R^{613}$ oder $R^{614}$ eine Carboxylgruppe darstellt.

**5.** Verbindung nach Anspruch 2,

wobei $R^{401}$ und $R^{406}$ jeweils unabhängig eine Hydroxylgruppe darstellen.

6. Färbungszusammensetzung, umfassend:
die Verbindung nach einem der Ansprüche 1 bis 5.

7. Tintenstrahl-Aufzeichnungstinte, umfassend:
die Verbindung nach einem der Ansprüche 1 bis 5.

8. Tintenstrahl-Aufzeichnungsverfahren unter Verwendung der Tintenstrahl-Aufzeichnungstinte nach Anspruch 7.

9. Tintenstrahldruckerkartusche, die gefüllt ist mit der Tintenstrahl-Aufzeichnungstinte nach Anspruch 7.

10. Tintenstrahlaufgezeichnetes Material, das durch Bilden eines gefärbten Bilds auf einem Aufzeichnungsmaterial unter Verwendung der Tintenstrahl-Aufzeichnungstinte nach Anspruch 7 erhalten wird.

## Revendications

1. Composé représenté par la formule (1),

Formule (1)

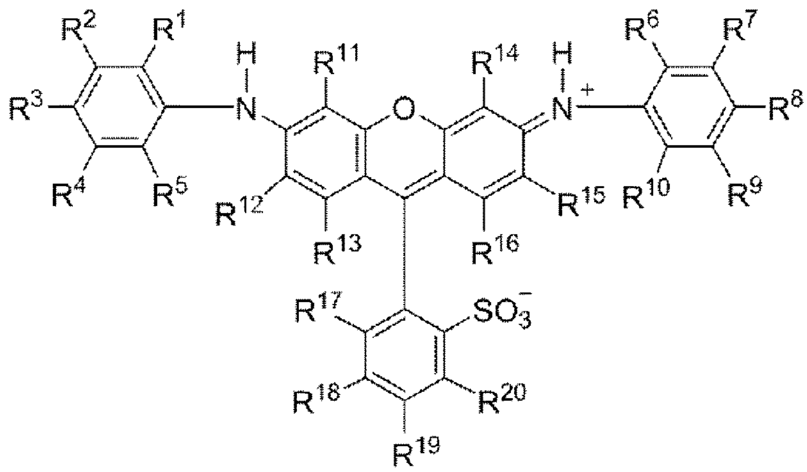

dans la formule (1), $R^1$, $R^5$, $R^6$ et $R^{10}$ représentent chacun indépendamment un groupe alkyle possédant de 1 à 6 atomes de carbone ;
$R^3$ et $R^8$ représentent chacun indépendamment un groupe alkyle possédant de 1 à 6 atomes de carbone ;
$R^4$, $R^9$, $R^{12}$ et $R^{15}$ représentent chacun indépendamment un atome d'hydrogène ou un groupe sulfo, dans lesquels au moins l'un parmi $R^4$, $R^9$, $R^{12}$ ou $R^{15}$ représente un groupe sulfo ;
$R^{11}$, $R^{13}$, $R^{14}$, $R^{16}$, $R^{17}$, $R^{18}$, $R^{19}$ et $R^{20}$ représentent chacun un atome d'hydrogène ;
$R^2$ et $R^7$ représentent chacun indépendamment un atome d'hydrogène, un groupe alkyle ou un substituant représenté par la formule (A), et au moins l'un parmi $R^2$ et $R^7$ représente un substituant représenté par la formule (A),

Formule (A)

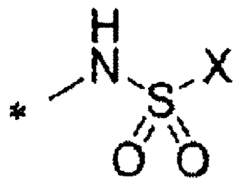

dans la formule (A), X représente un substituant représenté par la formule (X1), la formule (X2) ou la formule (X3) ; et * représente une liaison liée à un cycle benzène,

Formule (X1)

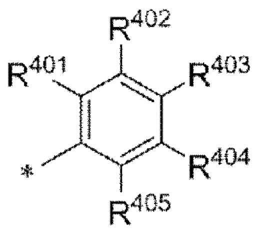

dans la formule (X1), $R^{401}$, $R^{402}$, $R^{403}$, $R^{404}$ et $R^{405}$ représentent chacun indépendamment un atome d'hydrogène ou un substituant choisi parmi un groupe alkyle possédant de 1 à 6 atomes de carbone, un groupe alcoxy possédant de 1 à 6 atomes de carbone, un groupe hydroxyle, un groupe carboxylique, un atome de chlore, un groupe nitro et un groupe trifluorométhyle, à condition qu'au moins l'un parmi $R^{401}$, $R^{402}$, $R^{403}$, $R^{404}$ ou $R^{405}$ représente un groupe hydroxyle, et au moins l'un parmi $R^{401}$, $R^{402}$, $R^{403}$, $R^{404}$ ou $R^{405}$ représente un groupe carboxylique ; et * représente une liaison liée à un atome de soufre ;

Formule (X2)

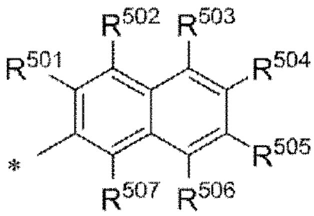

dans la formule (X2), $R^{501}$, $R^{502}$, $R^{503}$, $R^{504}$, $R^{505}$, $R^{506}$ et $R^{507}$ représentent chacun indépendamment un atome d'hydrogène ou un substituant choisi parmi un groupe alkyle possédant de 1 à 6 atomes de carbone, un groupe alcoxy possédant de 1 à 6 atomes de carbone, un groupe carboxylique ou un groupe hydroxy, à condition qu'au moins l'un parmi $R^{501}$, $R^{502}$, $R^{503}$, $R^{504}$, $R^{505}$, $R^{506}$ ou $R^{507}$ représente un groupe hydroxyle, et au moins l'un parmi $R^{501}$, $R^{502}$, $R^{503}$, $R^{504}$, $R^{505}$, $R^{506}$ ou $R^{507}$ représente un groupe carboxylique ; et * représente une liaison liée à un atome de soufre ; et

Formule (X3)

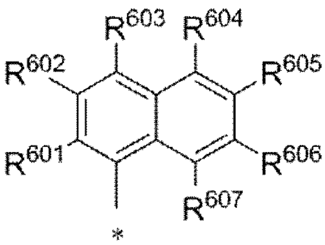

dans la formule (X3), $R^{601}$, $R^{602}$, $R^{603}$, $R^{604}$, $R^{605}$, $R^{606}$ et $R^{607}$ représentent chacun indépendamment un atome d'hydrogène ou un substituant choisi parmi un groupe alkyle possédant de 1 à 6 atomes de carbone, un groupe

alcoxy possédant de 1 à 6 atomes de carbone, un groupe hydroxyle et un groupe carboxylique, à condition qu'au moins l'un parmi $R^{601}$, $R^{602}$, $R^{603}$, $R^{604}$, $R^{605}$, $R^{606}$ ou $R^{607}$ représente un groupe hydroxyle, et au moins l'un parmi $R^{601}$, $R^{602}$, $R^{603}$, $R^{604}$, $R^{605}$, $R^{606}$ ou $R^{607}$ représente un groupe carboxylique ; et * représente une liaison liée à un atome de soufre.

**2.** Composé selon la revendication 1,
dans lequel la formule (1) est représentée par la formule (2),

Formule (2)

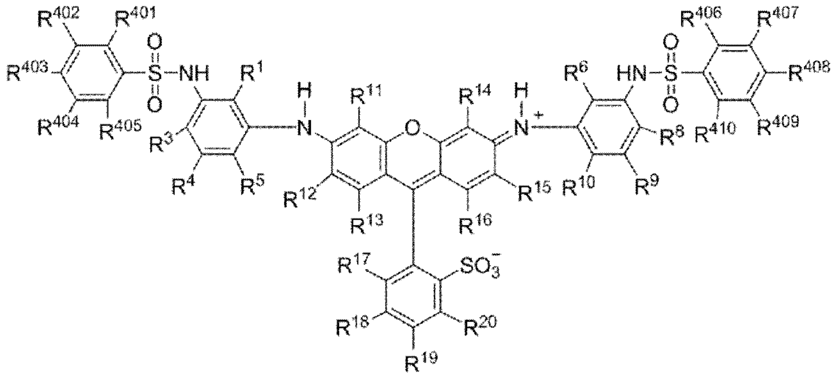

dans la formule (2), $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{401}$, $R^{402}$, $R^{403}$, $R^{404}$ et $R^{405}$ sont définis selon la revendication 1 ; et
$R^{406}$, $R^{407}$, $R^{408}$, $R^{409}$ et $R^{410}$ représentent chacun indépendamment un atome d'hydrogène ou un substituant choisi parmi un groupe alkyle possédant de 1 à 6 atomes de carbone, un groupe alcoxy possédant de 1 à 6 atomes de carbone, un groupe hydroxyle, un groupe carboxylique, un atome de chlore, un groupe nitro et un groupe trifluorométhyle, à condition qu'au moins l'un parmi $R^{406}$, $R^{407}$, $R^{408}$, $R^{409}$ ou $R^{410}$ représente un groupe hydroxyle, et au moins l'un parmi $R^{406}$, $R^{407}$, $R^{408}$, $R^{409}$ ou $R^{410}$ représente un groupe carboxylique.

**3.** Composé selon la revendication 1,
dans lequel la formule (1) est représentée par la formule (3),

Formule (3)

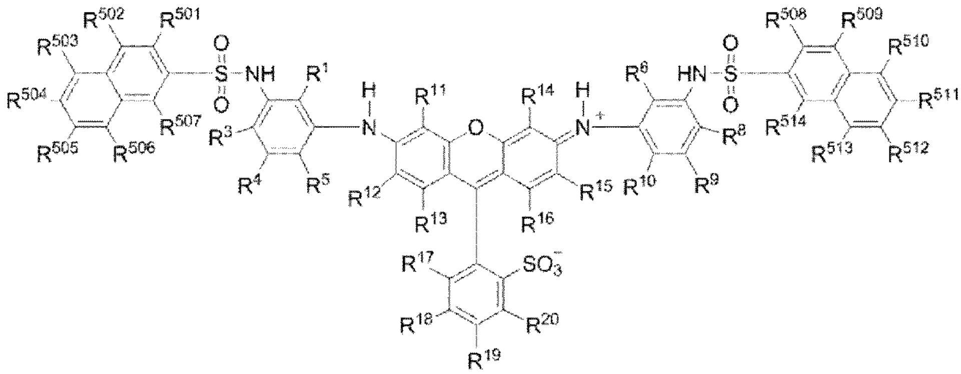

dans la formule (3), $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{501}$, $R^{502}$, $R^{503}$, $R^{504}$, $R^{505}$, $R^{506}$ et $R^{507}$ sont définis selon la revendication 1 ; et
$R^{508}$, $R^{509}$, $R^{510}$, $R^{511}$, $R^{512}$, $R^{513}$ et $R^{514}$ représentent chacun indépendamment un atome d'hydrogène ou un substituant choisi parmi un groupe alkyle possédant de 1 à 6 atomes de carbone, un groupe alcoxy possédant de 1 à 6 atomes de carbone, un groupe carboxylique ou un groupe hydroxy, à condition qu'au moins l'un parmi $R^{508}$, $R^{509}$, $R^{510}$, $R^{511}$, $R^{512}$, $R^{513}$ ou $R^{514}$ représente un groupe hydroxyle, et au moins l'un parmi $R^{508}$, $R^{509}$, $R^{510}$, $R^{511}$, $R^{512}$, $R^{513}$ ou $R^{514}$ représente un groupe carboxylique.

**4.** Composé selon la revendication 1,

dans lequel la formule (1) est représentée par la formule (4),

Formule (4)

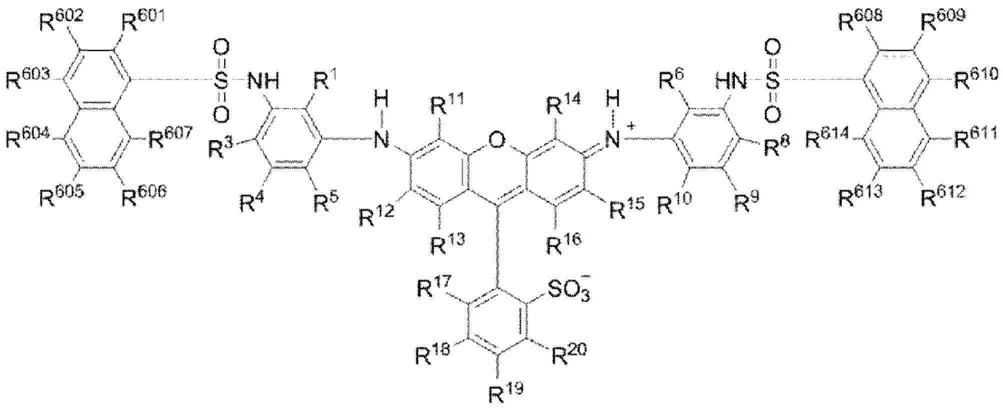

dans la formule (4), $R^1$, $R^3$, $R^4$, $R^5$, $R^6$, $R^8$, $R^9$, $R^{10}$, $R^{11}$, $R^{12}$, $R^{13}$, $R^{14}$, $R^{15}$, $R^{16}$, $R^{17}$, $R^{18}$, $R^{19}$, $R^{20}$, $R^{601}$, $R^{602}$, $R^{603}$, $R^{604}$, $R^{605}$, $R^{606}$ et $R^{607}$ sont définis selon la revendication 1 ; et
$R^{608}$, $R^{609}$, $R^{610}$, $R^{611}$, $R^{612}$ et $R^{613}$ et $R^{614}$ représentent chacun indépendamment un atome d'hydrogène ou un substituant choisi parmi un groupe alkyle possédant de 1 à 6 atomes de carbone, un groupe alcoxy possédant de 1 à 6 atomes de carbone, un groupe hydroxyle et un groupe carboxylique, à condition qu'au moins l'un parmi $R^{608}$, $R^{609}$, $R^{610}$, $R^{611}$, $R^{612}$, $R^{613}$ ou $R^{614}$ représente un groupe hydroxyle, et au moins l'un parmi $R^{608}$, $R^{609}$, $R^{610}$, $R^{611}$, $R^{612}$, $R^{613}$ ou $R^{614}$ représente un groupe carboxylique.

**5.** Composé selon la revendication 2,
dans lequel $R^{401}$ et $R^{406}$ représentent chacun indépendamment un groupe hydroxyle.

**6.** Composition de coloration comprenant :
le composé selon l'une quelconque des revendications 1 à 5.

**7.** Encre d'enregistrement à jet d'encre comprenant :
le composé selon l'une quelconque des revendications 1 à 5.

**8.** Procédé d'enregistrement à jet d'encre utilisant l'encre d'enregistrement à jet d'encre selon la revendication 7.

**9.** Cartouche d'imprimante à jet d'encre qui est remplie d'une encre d'enregistrement à jet d'encre selon la revendication 7.

**10.** Matériel enregistré à jet d'encre qui est obtenu par la formation d'une image en couleur sur un matériel d'enregistrement utilisant de l'encre d'enregistrement à jet d'encre selon la revendication 7.

FIG. 1

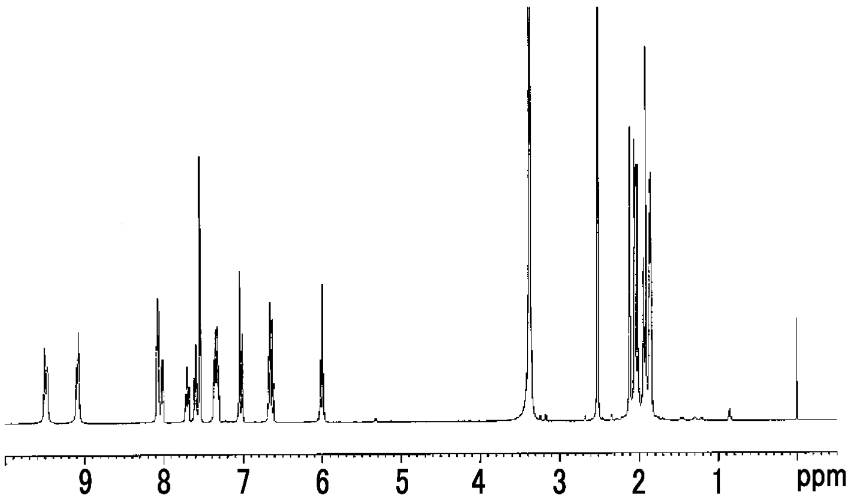


FIG. 2

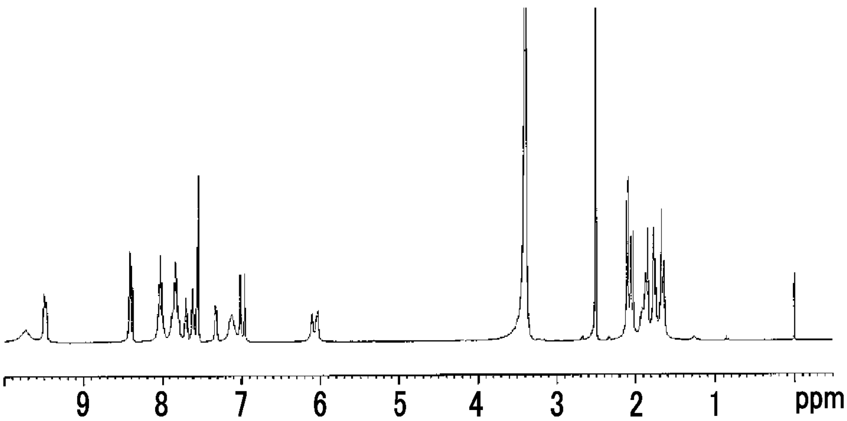


FIG. 3

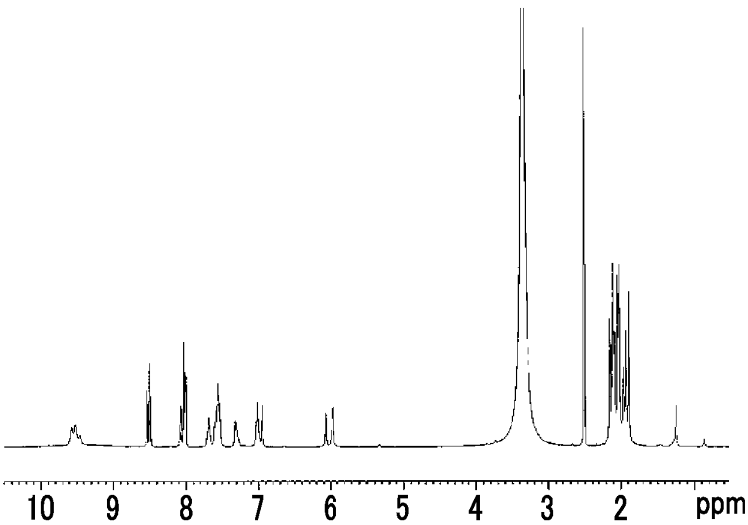

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011148973 A
- JP 9241553 A
- JP H09241553 A
- EP 2669338 A
- JP 2006199860 A
- JP 58185677 A
- JP S58185677 A
- JP 61190537 A
- JP S61190537 A
- JP 2000782 A
- JP H02782 A
- JP 5197075 A
- JP H05197075 A
- JP 9034057 A
- JP H0934057 A
- JP 46002784 A
- JP S462784 A
- JP 5194483 A
- JP H05194483 A
- US 3214463 A
- JP 48030492 B
- JP S4830492 B
- JP 56021141 B
- JP S5621141 B
- JP 10088106 A
- JP H1088106 A
- JP 4298503 A
- JP H04298503 A
- JP 8053427 A
- JP H0853427 A
- JP 8239368 A
- JP H08239368 A
- JP 10182621 A
- JP H10182621 A
- JP 8501291 A
- JP H08501291 A
- JP 62215272 A
- JP S62215272 A
- JP 59157636 A
- JP S59157636 A
- JP 2004285269 A
- JP 11286637 A
- JP H11286637 A
- JP 2000078491 A
- JP 2000080259 A
- JP 2000062370 A
- JP 2000078454 A
- JP 2000203856 A
- JP 2000203857 A
- JP 5148436 A
- JP H05148436 A
- JP 5295312 A
- JP H05295312 A
- JP 7097541 A
- JP H0797541 A
- JP 7082515 A
- JP H0782515 A
- JP 7118584 A
- JP H07118584 A
- JP 2000087539 A
- JP 8169172 A
- JP H08169172 A
- JP 8027693 A
- JP H0827693 A
- JP 2276670 A
- JP H02276670 A
- JP 7276789 A
- JP H07276789 A
- JP 9323475 A
- JP H09323475 A
- JP 62238783 A
- JP S62238783 A
- JP 10153989 A
- JP H10153989 A
- JP 10217473 A
- JP H10217473 A
- JP 10235995 A
- JP H10235995 A
- JP 10337947 A
- JP H10337947 A
- JP 10217597 A
- JP H10217597 A
- JP 2000363090 A
- JP 2000315231 A
- JP 2000354380 A
- JP 2000343944 A
- JP 2000268952 A
- JP 2000299465 A
- JP 2000297365 A
- JP 48028325 A
- JP S4828325 A
- JP 54074430 A
- JP S5474430 A
- JP 54124726 A
- JP S54124726 A
- JP 55022766 A
- JP S5522766 A
- JP 55142339 A

- JP S55142339 A
- JP 60023850 A
- JP S6023850 A
- JP 60023851 A
- JP S6023851 A
- JP 60023852 A
- JP S6023852 A
- JP 60023853 A
- JP S6023853 A
- JP 60057836 A
- JP S6057836 A
- JP 60060643 A
- JP S6060643 A
- JP 60118834 A
- JP S60118834 A
- JP 60122940 A
- JP S60122940 A
- JP 60122941 A
- JP S60122941 A
- JP 60122942 A
- JP S60122942 A
- JP 60235134 A
- JP S60235134 A
- JP 1161236 A
- JP H01161236 A
- US 2484430 A
- US 2548564 A
- US 3148061 A
- US 3309690 A
- US 4115124 A
- US 4124386 A
- US 4193800 A
- US 4273853 A
- US 4282305 A
- US 4450224 A
- JP 62173463 A
- JP S62173463 A
- JP 62183457 A
- JP S62183457 A
- JP 57009053 B
- JP S579053 B
- JP 61020994 A
- JP S6120994 A
- JP 62135826 A
- JP S62135826 A
- JP 62245258 A
- JP S62245258 A
- JP 62136648 A
- JP S62136648 A
- JP 62110066 A
- JP S62110066 A
- DE 264786
- DE 278091

**Non-patent literature cited in the description**

- Research Disclosure. 24239
- Research Disclosure. 17643
- Research Disclosure. 15162
- Research Disclosure. 18716
- Research Disclosure. 36544
- Research Disclosure. 307105
- Research Disclosure. 308119